# EUROPEAN PATENT APPLICATION

(11) **EP 4 811 621 A1**
(43) Date of publication of application: **23.09.2026**
(21) Application number: 24896552.7
(22) Date of filing: 27.11.2024
(51) Int. Cl.: H02K 7/116

(54) **POWERTRAIN WITH WIRE OUTGOING FROM SPEED REDUCER, DUAL-MOTOR POWERTRAIN AND ELECTRIC VEHICLE**

(30) Priority: 30.11.2023 CN 202311638750
(71) Applicant: Huawei Digital Power Technologies Co., Ltd., Shenzhen, Guangdong 518043 (CN)
(72) Inventor: SHI, Chaojie, Shenzhen, Guangdong 518043 (CN); WU, Quanpeng, Shenzhen, Guangdong 518043 (CN); HUANG, Zhen, Shenzhen, Guangdong 518043 (CN)
(74) Representative: Maiwald GmbH
(86) International application number: PCT/CN2024/134729
(87) International publication number: WO 2025/113465

(57) **Abstract**

This application provides a powertrain with lines coming out from a side of a reducer, a dual-motor powertrain, and an electric vehicle. The powertrain includes an intermediate integrated housing, a resolver, a motor, and a reducer. The intermediate integrated housing includes one partition plate and two circumferential housings. One of the circumferential housings is configured to fasten a motor stator of the motor and accommodate a motor rotor of the motor, and includes at least one through hole. The other circumferential housing is configured to accommodate a gear set of the reducer. The partition plate is configured to separate inner cavities of the two circumferential housings. The partition plate includes one shaft hole and at least one line outlet hole. The shaft hole and the at least one line outlet hole are used for communication between the inner cavities of the two circumferential housings. The shaft hole is coaxially arranged with an input shaft of the reducer or a motor shaft of the motor. A distance between the at least one line outlet hole and a center point of the shaft hole is greater than an inner diameter of a resolver stator of the resolver. The powertrain provided in this application has a small size in its axial direction.

## Description

This application claims priority to Chinese Patent Application No. 202311638750.7, filed with the China National Intellectual Property Administration on November 30, 2023 and entitled "POWERTRAIN WITH LINES COMING OUT FROM SIDE OF REDUCER, DUAL-MOTOR POWERTRAIN, AND ELECTRIC VEHICLE", which is incorporated herein by reference in its entirety.

### TECHNICAL FIELD

This application relates to the field of powertrain technologies, and in particular, to a powertrain with lines coming out from a side of a reducer, a dual-motor powertrain, and an electric vehicle.

### BACKGROUND

In recent years, environmental pollution and energy shortage accelerate development and utilization of green renewable energy. Electric vehicles are increasingly popular with users due to their advantages such as low pollution, low noise, and high energy efficiency. A market share of electric vehicles also increases year by year. To accelerate development pace and reduce development costs, a powertrain of an electric vehicle often needs to have better layout compatibility to accommodate a space requirement of front and rear axle arrangement. However, in an existing electric vehicle, a powertrain often has an excessively large structure size, resulting in difficulty in vehicle layout and making it challenging for the powertrain to adapt to various vehicle models.

### SUMMARY

This application provides a powertrain with lines coming out from a side of a reducer, a dual-motor powertrain, and an electric vehicle.

According to a first aspect, this application provides a powertrain with lines coming out from a side of a reducer. The powertrain includes one intermediate integrated housing, one resolver, one motor, and one reducer. The motor is configured to be driven by a motor controller to actuate the reducer. The intermediate integrated housing includes two circumferential housings and one partition plate that are integrally die-cast. The two circumferential housings are arranged in an axial direction of the powertrain. One of the circumferential housings is configured to fasten a motor stator of the motor and accommodate a motor rotor of the motor. The other circumferential housing is configured to accommodate a gear set of the reducer. The other circumferential housing includes at least one through hole. The at least one through hole penetrates the other circumferential housing. The partition plate is configured to separate inner cavities of the two circumferential housings. The partition plate includes one shaft hole, at least one line outlet hole, and two end faces opposite to each other in the axial direction of the powertrain. The shaft hole and the at least one line outlet hole are used for communication between the inner cavities of the two circumferential housings. The shaft hole is coaxially arranged with an input shaft of the reducer or a motor shaft of the motor. A distance between the at least one line outlet hole and a center point of the shaft hole is greater than an inner diameter of a resolver stator of the resolver.

The at least one line outlet hole is used for a connection line of each device in one of the circumferential housings to pass through. In embodiments of this application, the partition plate includes the at least one line outlet hole used for communication between the inner cavity of one of the circumferential housings and the inner cavity of the other circumferential housing, and the other circumferential housing includes the at least one through hole used for communication between the inner cavity of the other circumferential housing and an inner cavity of the motor controller, so that the connection line of the device in one of the circumferential housings can be connected to the motor controller through the line outlet hole, the inner cavity of the other circumferential housing, and the through hole in sequence from the inner cavity of one of the circumferential housings. In this way, the device in one of the circumferential housings is connected to the motor controller from the other circumferential housing on a side of the reducer, to fully utilize space between the other circumferential housing and the gear set of the reducer in a radial direction. The connection line of the device in one of the circumferential housings does not need to additionally occupy space of one of the circumferential housings in the axial direction, or the device in one of the circumferential housings occupies less space of one of the circumferential housings in the axial direction. Components in the intermediate integrated housing are compactly arranged, to reduce a size of the powertrain in the axial direction and facilitate mounting and arrangement of the powertrain in an electric vehicle.

In addition, because the connection line of the device in one of the circumferential housings passes through the line outlet hole of the partition plate and is connected to the motor controller in the other circumferential housing, the connection line is concentrated in a middle position close to the partition plate in the intermediate integrated housing, to reduce a risk of bumping into the connection line or scratching a harness, and improve reliability of connections of the connection line to the device in one of the circumferential housings and the motor controller.

In an embodiment, an end face facing the motor stator of the motor in the two end faces is configured to fasten the resolver stator of the resolver. A resolver rotor of the resolver is configured to be in transmission connection with the motor shaft of the motor or the input shaft of the reducer. The at least one line outlet hole includes a first line outlet hole. The first line outlet hole is used for a resolver connection line between the resolver and the motor controller to pass through. The resolver receives, through the resolver connection line, electric energy transmitted by the motor controller. The resolver connection line may enter the inner cavity of the other circumferential housing through the first line outlet hole, and be connected to the motor controller through the through hole of the other circumferential housing.

In embodiments of this application, the resolver is connected to the motor controller from the other circumferential housing on the side of the reducer, to fully utilize the space between the other circumferential housing and the gear set of the reducer in the radial direction. The resolver connection line of the resolver does not need to additionally occupy space of one of the circumferential housings in the axial direction, or the resolver connection line occupies less space of one of the circumferential housings in the axial direction. The components in the intermediate integrated housing are compactly arranged, to reduce the size of the powertrain in the axial direction and facilitate mounting and arrangement of the powertrain in the electric vehicle. In addition, because the resolver connection line of the resolver passes through the first line outlet hole of the partition plate and is connected to the motor controller in the other circumferential housing, the resolver connection line is concentrated in the middle position close to the partition plate in the intermediate integrated housing, to reduce a risk of bumping into the resolver connection line or scratching a harness, and improve reliability of connections of the resolver connection line to the resolver and the motor controller.

In an embodiment, a distance between the first line outlet hole and the shaft hole is less than an inner diameter of the motor stator of the motor in a radial direction of the powertrain. A hole area of the first line outlet hole is less than a hole area of the shaft hole. In embodiments of this application, the first line outlet hole is closer to the shaft hole in the radial direction, so that the first line outlet hole is closer to the resolver stator, to reduce a length of a resolver connection line between the first line outlet hole and the resolver stator, and facilitate miniaturization and neat line arrangement of the powertrain. In addition, the hole area of the first line outlet hole is less than the hole area of the shaft hole, to reduce a hole area of the partition plate and improve overall strength of the partition plate.

In an embodiment, a line outlet end of a motor winding of the motor faces the end face. The at least one line outlet hole includes a second line outlet hole. The second line outlet hole is used for a winding connection line between the motor winding of the motor and the motor controller to pass through. The second line outlet hole is used for the winding connection line of the motor winding to pass through. The motor winding receives, through the winding connection line, electric energy transmitted by the motor controller. The winding connection line may enter the inner cavity of the other circumferential housing through the second line outlet hole, and be connected to the motor controller through the through hole of the other circumferential housing.

In embodiments of this application, both the motor winding and the resolver are connected to the motor controller from the other circumferential housing on the side of the reducer, to fully utilize the space between the other circumferential housing and the gear set of the reducer in the radial direction. The winding connection line and the resolver connection line do not need to additionally occupy space of one of the circumferential housings in the axial direction, or the winding connection line and the resolver connection line occupy less space of one of the circumferential housings in the axial direction. The components in the intermediate integrated housing are compactly arranged, to reduce the size of the powertrain in the axial direction and facilitate mounting and arrangement of the powertrain in the electric vehicle.

In addition, the winding connection line is concentrated in the middle position close to the partition plate in the intermediate integrated housing, to reduce a risk of bumping into the winding connection line or scratching a harness, and improve reliability of connections of the winding connection line to the motor winding and the motor controller.

Further, the second line outlet hole is spaced apart from the first line outlet hole and the shaft hole. The second line outlet hole is a hole different from the first line outlet hole and the shaft hole. The winding connection line and the resolver connection line pass through different line outlet holes, to help improve line arrangement neatness and reduce a risk of line misconnection.

In an embodiment, a distance between the at least one line outlet hole and the center point of the shaft hole is less than an outer diameter of the motor stator of the motor in the radial direction of the powertrain. Generally, a distance between the line outlet end of the motor winding and the center point of the shaft hole is less than the outer diameter of the motor stator of the motor, and an outer diameter of the resolver stator is less than the outer diameter of the motor stator of the motor. In embodiments of this application, the at least one line outlet hole is arranged between the shaft hole and an outer circumferential surface of the motor stator in the radial direction of the powertrain. This reduces lengths of the winding connection line and the resolver connection line in one of the circumferential housings, and facilitates miniaturization and neat line arrangement of the powertrain. In addition, because a projection of the at least one line outlet hole is within a projection of the outer circumferential surface of the motor stator in the axial direction, the winding connection line and the resolver connection line do not additionally occupy space of one of the circumferential housings in the radial direction. This helps reduce a size of one of the circumferential housings in the radial direction, to reduce a total size of the powertrain.

In an embodiment, the at least one line outlet hole includes the first line outlet hole and the second line outlet hole. The second line outlet hole and the first line outlet hole are spaced apart in a circumferential direction of the powertrain. A distance between the second line outlet hole and the shaft hole is greater than or equal to the distance between the first line outlet hole and the shaft hole in the radial direction of the powertrain. In embodiments of this application, because the second line outlet hole and the first line outlet hole are arranged between an input shaft bearing cavity and an inner wall of one of the circumferential housings in the radial direction, and there is limited space between the input shaft bearing cavity and the inner wall of one of the circumferential housings, arranging the second line outlet hole and the first line outlet hole in the circumferential direction reduces interference between the winding connection line and the winding connection line, and improves the overall strength of the partition plate, so that structures of the second line outlet hole and the first line outlet hole are not prone to damage.

In an embodiment, a hole area of the second line outlet hole is greater than or equal to the hole area of the first line outlet hole. In embodiments of this application, the hole area of the second line outlet hole is greater than the hole area of the first line outlet hole, so that the winding connection line with a larger size smoothly passes through the second line outlet hole.

In an embodiment, the at least one through hole includes a first through hole and a second through hole. The first through hole and the second through hole are spaced apart in the circumferential direction and the axial direction of the powertrain. In embodiments of this application, the second through hole and the first through hole are spaced apart. The second through hole is a through hole different from the first through hole. The winding connection line and the resolver connection line are connected to the motor controller through different through holes. Small sizes of the second through hole and the first through hole facilitate sealing between the other circumferential housing and the motor controller.

In an embodiment, in the axial direction of the powertrain, a distance between the second through hole and the partition plate is less than a distance between the first through hole and the partition plate. In embodiments of this application, the second through hole and the first through hole are staggered in the axial direction, to reduce space of the other circumferential housing occupied by the second through hole and the first through hole in the radial direction. This helps reduce the size of the powertrain. In addition, generally, the motor winding is connected to a strong current, and the resolver is connected to a weak current. The winding connection line has a larger size. In addition, the winding connection line is usually a copper bar. The second through hole is closer to the partition plate, to facilitate fastening of the winding connection line, and reduce a risk that the winding connection line interferes with the gear set of the reducer.

In an embodiment, in the radial direction of the powertrain, a distance between the second through hole and the shaft hole is greater than or equal to a distance between the first through hole and the shaft hole. In embodiments of this application, because the winding connection line has a larger size, and a quantity of second through holes is generally greater, the second through holes are away from the shaft hole, to facilitate arrangement of the resolver connection line between the first through hole and the first line outlet hole, and the connection of the resolver connection line to the motor controller through the first through hole.

In an embodiment, the other end face away from the motor stator in the two end faces includes the input shaft bearing cavity, an intermediate shaft bearing cavity, and an output shaft bearing cavity. The input shaft bearing cavity is configured to fasten an outer ring of an input shaft bearing. An inner ring of the input shaft bearing is configured to be in transmission connection with the input shaft of the reducer. The shaft hole is coaxially arranged with the input shaft bearing cavity. The intermediate shaft bearing cavity is configured to fasten an outer ring of an intermediate shaft bearing. An inner ring of the intermediate shaft bearing is configured to be in transmission connection with an intermediate shaft of the reducer. The output shaft bearing cavity is configured to fasten an outer ring of an output shaft bearing. An inner ring of the output shaft bearing is configured to be in transmission connection with an output shaft of the reducer. A distance between the output shaft bearing cavity and the shaft hole is greater than a distance between the intermediate shaft bearing cavity and the shaft hole. A distance between the at least one line outlet hole and the input shaft bearing cavity is less than a distance between the at least one line outlet hole and the output shaft bearing cavity.

In embodiments of this application, the resolver and the input shaft bearing cavity are respectively disposed on the two opposite end faces, to facilitate neat component arrangement of the powertrain and maintenance of the powertrain. In addition, the at least one line outlet hole, such as the first line outlet hole and the second line outlet hole, is arranged on a circumferential side that is of the input shaft bearing cavity and that is away from the output shaft bearing cavity, to facilitate neat arrangement of the resolver connection line and the winding connection line in the other circumferential housing, and reduce a risk that the resolver connection line and the winding connection line interfere with the gear set of the reducer.

In an embodiment, the powertrain includes the other motor, the other reducer, the other intermediate integrated housing, one middle partition plate, and two end plates. The middle partition plate is configured to fasten the other circumferential housing in the intermediate integrated housing to form one reducer accommodating cavity. The reducer accommodating cavity is configured to accommodate the reducer. The middle partition plate is configured to fasten the other circumferential housing in the other intermediate integrated housing to form the other reducer accommodating cavity. The other reducer accommodating cavity is configured to accommodate the other reducer. One of the end plates is configured to fasten one of the circumferential housings in the intermediate integrated housing to form one motor accommodating cavity. The motor accommodating cavity is configured to accommodate the motor. The other end plate is configured to fasten one of the circumferential housings in the other intermediate integrated housing to form the other motor accommodating cavity. The other motor accommodating cavity is configured to accommodate the other motor.

In embodiments of this application, two motors and two reducers are integrated into the powertrain, so that an integration level of the powertrain can be increased, to reduce a volume and costs, facilitate a lightweight design of the powertrain, and improve power density.

In an embodiment, the powertrain includes the other resolver. An end face that is of a partition plate in the other intermediate integrated housing and that faces a motor stator of the other motor is configured to fasten the other resolver. In the axial direction of the powertrain, a distance between the resolver and the other resolver is greater than a distance between the partition plate in the intermediate integrated housing and the partition plate in the other intermediate integrated housing, and less than a distance between the motor stator of the motor and the motor stator of the other motor.

In embodiments of this application, in the axial direction of the powertrain, the two resolvers are arranged on inner sides of the two motor stators and on outer sides of the two partition plates. The two resolvers both have their lines coming out from inner sides of the two partition plates, namely, sides of the reducers. Resolver connection lines of the two resolvers are respectively connected to motor controllers through inner cavities of the two other circumferential housings. This helps reduce a length of the powertrain in the axial direction and improve adaptability of the powertrain. In addition, arranging the resolver connection lines of the two resolvers on the inner sides of the two motor stators reduces a risk of bumping into the resolver connection lines or scratching a harness, and improves reliability of connections of the resolver connection lines to the resolvers and the motor controllers.

According to a second aspect, this application provides a powertrain integrating two motors. The powertrain includes two motors, two reducers, two resolvers, two intermediate integrated housings, and a middle partition plate. Each of the intermediate integrated housings includes two circumferential housings and one partition plate that are integrally die-cast. The two circumferential housings in each of the intermediate integrated housings are arranged in an axial direction of the powertrain. One of the circumferential housings is configured to fasten a motor stator of one of the motors and accommodate a motor rotor of the motor. The other circumferential housing is configured to accommodate a gear set of one of the reducers. The middle partition plate includes two mounting faces in the axial direction of the powertrain. Each of the mounting faces is configured to fasten the other circumferential housing in one of the intermediate integrated housings. The other circumferential housing in each of the intermediate integrated housings includes at least one through hole. The at least one through hole penetrates the other circumferential housing. The partition plate in each of the intermediate integrated housings includes one shaft hole, at least one line outlet hole, and two end faces opposite to each other in the axial direction of the powertrain. The shaft hole and the at least one line outlet hole are used for communication between inner cavities of the two circumferential housings in the same intermediate integrated housing. Each shaft hole is coaxially arranged with an input shaft of one of the reducers or a motor shaft of one of the motors. A distance between the at least one line outlet hole and a center point of the shaft hole is greater than an inner diameter of a resolver stator of one of the resolvers.

In embodiments of this application, two motors and two reducers are integrated into the powertrain, so that an integration level of the powertrain can be increased, to reduce a volume and costs, facilitate a lightweight design of the powertrain, and improve power density.

In embodiments of this application, a device in one of the circumferential housings is connected to a motor controller from the other circumferential housing on a side of the reducer, to fully utilize space between the other circumferential housing and the gear set of the reducer in a radial direction. A connection line of the device in one of the circumferential housings does not need to additionally occupy space of one of the circumferential housings in the axial direction, or the device in one of the circumferential housings occupies less space of one of the circumferential housings in the axial direction. Components in each intermediate integrated housing are compactly arranged, to reduce a size of the powertrain in the axial direction and facilitate mounting and arrangement of the powertrain in an electric vehicle.

In addition, because the connection line of the device in one of the circumferential housings passes through the line outlet hole of the partition plate and is connected to the motor controller in the other circumferential housing, the connection line is concentrated in a middle position of the powertrain in the axial direction, to reduce a risk of bumping into the connection line or scratching a harness, and improve reliability of connections of the connection line to the device in one of the circumferential housings and the motor controller.

In an embodiment, the powertrain further includes a motor controller housing. The motor controller housing includes a control signal connector mounting hole and a high-voltage direct current connector mounting hole. The control signal connector mounting hole is used to fasten a control signal connector. The control signal connector is configured to transmit a control signal to the motor controller. The high-voltage direct current connector mounting hole is used to fasten a high-voltage direct current connector. The high-voltage direct current connector is configured to receive power supplied by a power battery. The control signal connector mounting hole and the high-voltage direct current connector mounting hole are oppositely arranged in a direction perpendicular to the axial direction of the powertrain. In the direction in which the control signal connector mounting hole and the high-voltage direct current connector mounting hole are oppositely arranged, the control signal connector mounting hole and the high-voltage direct current connector mounting hole penetrate the motor controller housing.

In an embodiment, the at least one through hole of the other circumferential housing in each of the intermediate integrated housings is used for communication between an inner cavity of the motor controller housing and the inner cavity of the other circumferential housing. In the axial direction of the powertrain, the at least one through hole of the other circumferential housing in one of the intermediate integrated housings and the at least one through hole of the other circumferential housing in the other intermediate integrated housing are respectively arranged on two sides of the middle partition plate.

In embodiments of this application, in each of the intermediate integrated housings, the at least one through hole is closer to the partition plate, to help reduce lengths of a resolver connection line and a winding connection line, and improve line arrangement neatness of the powertrain.

In an embodiment, the powertrain includes two end plates. The motor controller housing includes two side faces. The two side faces are oppositely arranged in the axial direction of the powertrain. The two end plates are oppositely arranged in the axial direction of the powertrain. A distance between the two side faces is less than a distance between the two end plates in the axial direction of the powertrain. One of the end plates is configured to fasten one of the circumferential housings in one of the intermediate integrated housings to form one motor accommodating cavity. The motor accommodating cavity is configured to accommodate one of the motors. The other end plate is configured to fasten one of the circumferential housings in the other intermediate integrated housing to form the other motor accommodating cavity. The other motor accommodating cavity is configured to accommodate the other motor.

In embodiments of this application, a layout of the winding connection line, the resolver connection line, the resolver, and the like are replanned, so that components in the powertrain are arranged more compactly and neatly. The distance between the two side faces is less than the distance between the two end plates in the axial direction, so that a size of the housing of the motor controller can be reduced, to facilitate miniaturization of the powertrain.

According to a third aspect, this application provides an electric vehicle. The electric vehicle includes a wheel, a battery pack, and the foregoing powertrain. The powertrain is configured to receive power supplied by the battery pack and drive the wheel.

### BRIEF DESCRIPTION OF DRAWINGS

To describe technical solutions in embodiments of this application more clearly, the following describes the accompanying drawings used in embodiments of this application.
FIG. 1 is a diagram of an electric vehicle according to an embodiment of this application;
FIG. 2 is a diagram of a powertrain according to an embodiment of this application;
FIG. 3 is a three-dimensional view of a powertrain according to an embodiment of this application;
FIG. 4 is a sectional view of a powertrain according to an embodiment of this application;
FIG. 5 is a three-dimensional view of an intermediate integrated housing according to an embodiment of this application;
FIG. 6 is a side view of an intermediate integrated housing according to an embodiment of this application;
FIG. 7 is a three-dimensional view of an intermediate integrated housing according to an embodiment of this application;
FIG. 8 is a diagram of a trace of a resolver connection line and a winding connection line according to an embodiment of this application;
FIG. 9 is a rear view of an intermediate integrated housing according to an embodiment of this application; and
FIG. 10 is a top view of an intermediate integrated housing according to an embodiment of this application.

### DESCRIPTION OF EMBODIMENTS

The following describes the technical solutions in embodiments of this application with reference to the accompanying drawings in embodiments of this application. It is clear that the described embodiments are merely some rather than all of embodiments of this application.

Terms "first", "second", and the like in this specification are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of this application, unless otherwise stated, "a plurality of" means two or more.

In addition, in this specification, position terms such as "top" and "bottom" are defined relative to positions of structures in the accompanying drawings. It should be understood that these position terms are relative concepts used for relative description and clarification, and may correspondingly change according to changes in the positions of the structures.

For ease of understanding, the following first explains and describes English abbreviations and related technical terms used in embodiments of this application.

Parallel: "Parallel" defined in embodiments of this application is not limited to absolute parallelism. The definition of parallelism herein may be understood as basic parallelism, and includes non-absolute parallelism caused by factors such as an assembly tolerance, a design tolerance, and impact of structure flatness.

Perpendicular: "Perpendicular" defined in embodiments of this application is not limited to an absolute perpendicular intersection (where an included angle is 90 degrees) relationship. A perpendicular intersection relationship that is not absolute due to an assembly tolerance, a design tolerance, impact of structure flatness, or another factor is allowed. An error within a small angle range is allowed. For example, an assembly error range of 80 degrees to 100 degrees may be understood as a perpendicular relationship.

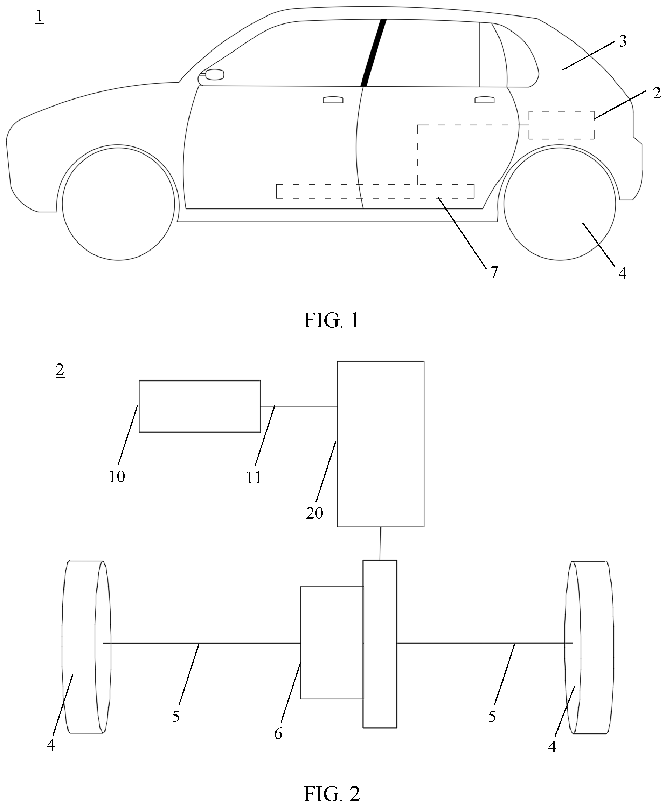

FIG. 1 is a diagram of an electric vehicle 1 according to an embodiment of this application. The electric vehicle 1 includes a vehicle body 3 and a powertrain 2. The powertrain 2 is mounted in the vehicle body 3. The powertrain 2 can drive a wheel 4 to rotate to provide power for the electric vehicle 1.

The electric vehicle 1 includes a two-wheeled, three-wheeled, or four-wheeled vehicle. The electric vehicle 1 may be one of a pure electric vehicle (Pure Electric Vehicle/Battery Electric Vehicle, PEV/BEV), a hybrid electric vehicle (Hybrid Electric Vehicle, HEV), a range extended electric vehicle (Range Extended Electric Vehicle, REEV), a plug-in hybrid electric vehicle (Plug-in Hybrid Electric Vehicle, PHEV), and a new energy vehicle (New Energy Vehicle). In an implementation, the electric vehicle 1 is a transportation vehicle. For example, the electric vehicle 1 is one of a commercial vehicle, a passenger vehicle, a motorcycle, a flight vehicle, and a train. In an implementation, the electric vehicle 1 is an industrial vehicle or an engineering vehicle. For example, the electric vehicle 1 is one of a forklift truck, a trailer, a tractor, an excavator, a bulldozer, and a crane. In an implementation, the vehicle may be an electric vehicle or a fuel vehicle. In an implementation, the electric vehicle 1 may alternatively be an agricultural device (such as a lawn mower or a harvester), an amusement device, a toy vehicle, or the like.

In an implementation, the electric vehicle 1 may include one or more powertrains 2.

FIG. 2 is a diagram of the powertrain 2 according to an embodiment of this application. The powertrain 2 includes a reducer 20 and a motor 10. The motor 10 includes a motor shaft 11. A coupling end of the motor shaft 11 is in transmission connection with a coupling end of an input shaft of the reducer 20. The motor shaft 11 is configured to transmit power to the input shaft of the reducer 20. An axial direction of the input shaft of the reducer 20 is parallel to an axial direction of the motor 10. A gear set of the reducer 20 can change a transmission ratio of the motor 10 to the wheel 4. The reducer 20 may include a single-speed, two-speed, or multi-speed reduction gear set.

In an implementation, the powertrain 2 further includes a wheel drive half-shaft 5 and a differential 6 (as shown in FIG. 2). The wheel drive half-shaft 5 is fastened to the wheel 4. The reducer 20 receives, through the input shaft of the reducer, the power transmitted by the motor shaft 11, and transmits the power to the wheel drive half-shaft 5 through the differential 6, to drive the wheel 4 to rotate. The differential 6 can enable left and right (or front and rear) wheels to rotate at different rotational speeds.

In an implementation, the powertrain 2 may alternatively not include the differential 6. For example, the powertrain 2 includes two motors 10. Torque of wheels 4 on two sides may be independently controlled by the two motors 10. In this case, the powertrain 2 does not need to be provided with the differential 6.

In an implementation, the powertrain 2 may include one motor 10 or one reducer 20. For example, the powertrain 2 may be a three-in-one single-motor powertrain. In an implementation, the powertrain 2 may include a plurality of motors 10 or a plurality of reducers 20. For example, the powertrain 2 may be a distributed dual-motor powertrain.

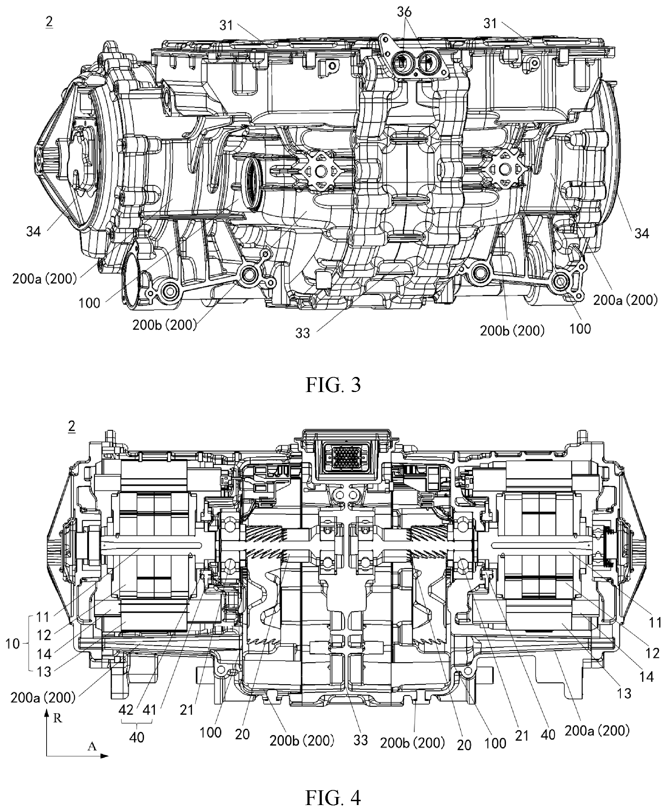

In an implementation, the motor 10 includes the motor shaft 11, a motor rotor 12, a motor stator 13, and a motor winding 14 (with reference to FIG. 4). The motor rotor 12 is sleeved and fastened on an outer surface of the motor shaft 11. The motor stator 13 is sleeved on the motor rotor 12 and spaced apart from an outer surface of the motor rotor 12. The motor winding 14 is mounted and fastened on the motor stator 13.

In an implementation, the electric vehicle 1 further includes a battery pack 7 (as shown in FIG. 1), and the powertrain 2 further includes a motor controller 31 (with reference to FIG. 3). The battery pack 7 includes at least one power battery. The motor controller 31 is connected to the battery pack 7 and the motor winding of the motor 10. The motor controller 31 is configured to receive a direct current output by the battery pack 7, convert the direct current output by the battery pack 7 into an alternating current, and transmit the alternating current to the motor winding. A rotating magnetic field generated after the motor winding 14 receives the alternating current interacts with a permanent magnet on the motor rotor 12. An electromagnetic field enables the motor rotor 12 to rotate, to drive the motor shaft 11 to rotate.

A structure size of the powertrain 2 affects mounting of the powertrain 2 in the electric vehicle 1. In the conventional technology, the powertrain 2 has an excessively large structure size, resulting in difficulty in vehicle layout and making it challenging for the powertrain 2 to adapt to various vehicle models. A compact and integrated design of the powertrain 2 provided in embodiments of this application makes a size of the powertrain 2 small, to facilitate arrangement and mounting of the powertrain 2 in a vehicle. In addition, the powertrain 2 can reduce occupied space of the electric vehicle 1, so that another functional component can be arranged and mounted in the electric vehicle 1, to improve overall performance of the electric vehicle 1.

The following describes the powertrain 2 in this application in detail.

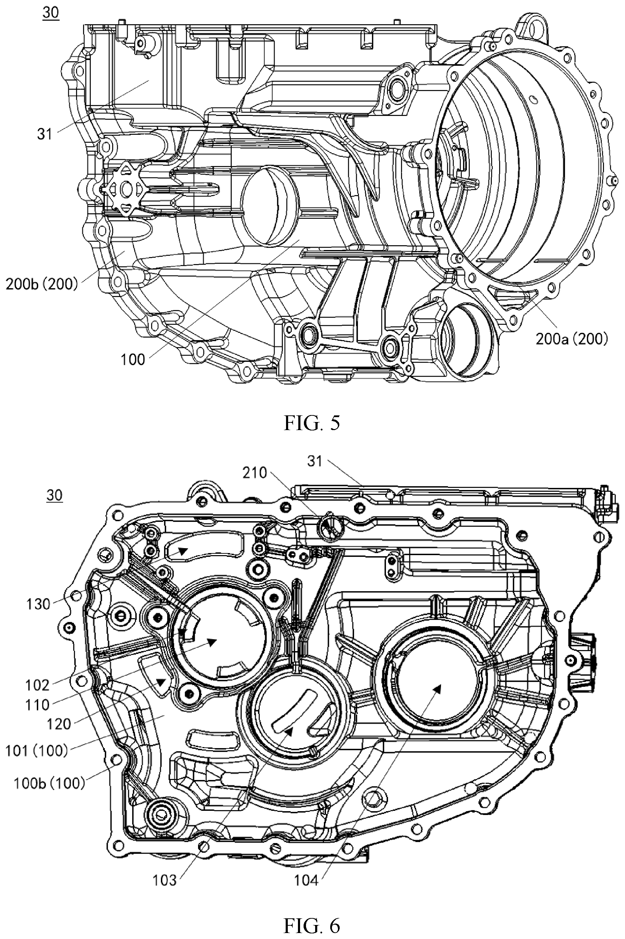

Refer to FIG. 3, FIG. 4, FIG. 5, and FIG. 6. FIG. 3 is a three-dimensional view of the powertrain 2 according to an embodiment of this application. FIG. 4 is a sectional view of the powertrain 2 according to an embodiment of this application. FIG. 5 is a three-dimensional view of an intermediate integrated housing 30 according to an embodiment of this application. FIG. 6 is a side view of the intermediate integrated housing 30 according to an embodiment of this application.

This application provides a powertrain 2 with lines coming out from a side of a reducer 20. The powertrain 2 includes one intermediate integrated housing 30, one resolver 40, one motor 10, and one reducer 20. The motor 10 is configured to receive a drive of a motor controller 31 to drive the reducer 20. The intermediate integrated housing 30 includes two circumferential housings 200 and one partition plate 100 that are integrally die-cast (as shown in FIG. 3 and FIG. 5). The two circumferential housings 200 are arranged in an axial direction A of the powertrain 2. One of the circumferential housings 200 is configured to fasten a motor stator 13 of the motor 10 and accommodate a motor rotor 12 of the motor 10 (as shown in FIG. 4). The other circumferential housing 200 is configured to accommodate a gear set of the reducer 20. The other circumferential housing 200 includes at least one through hole. The at least one through hole penetrates the other circumferential housing 200. The partition plate 100 is configured to separate inner cavities of the two circumferential housings 200. The partition plate 100 includes one shaft hole 110, at least one line outlet hole, and two end faces 101 opposite to each other in the axial direction A of the powertrain 2 (as shown in FIG. 6). The shaft hole 110 and the at least one line outlet hole are used for communication between the inner cavities of the two circumferential housings 200. The shaft hole 110 is coaxially arranged with an input shaft of the reducer 20 or a motor shaft 11 of the motor 10. A distance between the at least one line outlet hole and a center point of the shaft hole 110 is greater than an inner diameter of a resolver stator 41 of the resolver 40.

The axial direction A of the powertrain 2 is parallel to an axial direction A of the motor shaft 11 and an axial direction A of the input shaft of the reducer 20. The partition plate 100 is arranged between the two circumferential housings 200 in the axial direction A of the powertrain 2. Openings are provided on sides that are of the two circumferential housings 200 and that face the partition plate 100. The two end faces 101 of the partition plate 100 are respectively configured to cover the openings of the two circumferential housings 200 and fastened to the two circumferential housings 200 (with reference to FIG. 4 and FIG. 6).

The partition plate 100 and the two circumferential housings 200 are integrally formed. In other words, the intermediate integrated housing 30 is an integral structure. This improves connection strength between the partition plate 100 and the two circumferential housings 200. Overall strength of the intermediate integrated housing 30 is high, to help improve performance of the powertrain 2.

For ease of description, one of the circumferential housings 200 is defined as a circumferential housing 200a, and the other circumferential housing 200 is defined as a circumferential housing 200b. The inner cavity of the circumferential housing 200a is configured to accommodate the resolver stator 41 and the motor stator 13. The inner cavity of the circumferential housing 200a is further configured to accommodate a resolver rotor 42 of the resolver 40, the motor rotor 12, and at least a part of the motor shaft 11. The resolver 40 is configured to monitor a rotational speed of the motor shaft 11 and track a position of the motor rotor 12. The resolver stator 41 is sleeved on the resolver rotor 42. The resolver rotor 42 is sleeved and fastened on the motor shaft 11. The resolver rotor 42 can rotate with the motor shaft 11 and relative to the resolver stator 41. In an implementation, the resolver stator 41 of the resolver 40 is communicatively connected to the motor controller 31. The resolver stator 41 senses a rotation action of the resolver rotor 42, converts the rotation action into a signal, and transmits the signal to the motor controller 31. The motor controller 31 parses the signal to obtain a real-time rotational speed of the motor shaft 11.

The inner cavity of the circumferential housing 200b is configured to accommodate the gear set of the reducer 20. Generally, the gear set includes a rotating shaft, a gear, and a reducer bearing. The input shaft of the reducer 20 is a rotating shaft in the gear set. At least a part of the input shaft of the reducer 20 is accommodated in the inner cavity of the circumferential housing 200b. The at least one through hole of the circumferential housing 200b may be used for communication between the inner cavity of the circumferential housing 200b and an inner cavity of the motor controller 31.

The partition plate 100 includes the shaft hole 110 and the at least one line outlet hole. The shaft hole 110 and the at least one line outlet hole penetrate the two end faces 101 of the partition plate 100 in the axial direction A of the powertrain 2. The shaft hole 110 and the at least one line outlet hole are spaced apart in a radial direction R of the powertrain 2. The radial direction R of the powertrain 2 is perpendicular to the axial direction A of the powertrain.

The shaft hole 110 is used to accommodate at least one of a coupling end of the input shaft of the reducer 20 or a coupling end of the motor shaft 11 of the motor 10. The coupling end of the input shaft of the reducer 20 is configured to be in transmission connection with the coupling end of the motor shaft 11. For example, the shaft hole 110 is used for the coupling end of the motor shaft 11 to pass through, so that the coupling end of the motor shaft 11 enters the inner cavity of the circumferential housing 200b and is in transmission connection with the coupling end of the input shaft of the reducer 20. Alternatively, the shaft hole 110 is used for the coupling end of the input shaft of the reducer 20 to pass through, so that the coupling end of the input shaft of the reducer 20 enters the inner cavity of the circumferential housing 200a and is in transmission connection with the coupling end of the motor shaft 11. Alternatively, the coupling end of the motor shaft 11 may be in transmission connection with the coupling end of the input shaft of the reducer 20 in the shaft hole 110. The coupling end of the motor shaft 11 is in transmission connection with the coupling end of the input shaft of the reducer 20, so that power output by the motor shaft 11 is transmitted to the input shaft of the reducer 20.

The at least one line outlet hole is arranged between the resolver rotor 42 of the resolver 40 and the circumferential housing 200a in the radial direction R. The at least one line outlet hole is used for a connection line of each device in the circumferential housing 200a to pass through. In an implementation, the connection line is configured to connect the device in the circumferential housing 200a to the motor controller 31. For example, the connection line includes a resolver connection line. The resolver connection line is configured to connect the resolver 40 to the motor controller 31. The resolver 40 receives, through the resolver connection line, electric energy transmitted by the motor controller 31. The resolver connection line may enter the inner cavity of the circumferential housing 200b through the line outlet hole, and be connected to the motor controller 31 through the through hole of the circumferential housing 200b. For example, the connection line may further include a winding connection line. The winding connection line is configured to connect a motor winding 14 to the motor controller 31. The motor winding 14 receives, through the winding connection line, electric energy transmitted by the motor controller 31. The winding connection line may enter the inner cavity of the circumferential housing 200b through the line outlet hole, and be connected to the motor controller 31 through the through hole of the circumferential housing 200b.

It should be noted that the connection line may be in a form of a cable, a cable including a connector, a copper bar, or the like. The connection line is in any form for implementing a connection between devices.

In embodiments of this application, the partition plate 100 includes the at least one line outlet hole used for communication between the inner cavity of the circumferential housing 200a and the inner cavity of the circumferential housing 200b, and the circumferential housing 200b includes the at least one through hole used for communication between the inner cavity of the circumferential housing 200b and the inner cavity of the motor controller 31, so that the connection line of the device in the circumferential housing 200a can be connected to the motor controller 31 through the line outlet hole, the inner cavity of the circumferential housing 200b, and the through hole in sequence from the inner cavity of the circumferential housing 200a. In this way, the device in the circumferential housing 200a is connected to the motor controller 31 from the circumferential housing 200b on a side of the reducer 20, to fully utilize space between the circumferential housing 200b and the gear set of the reducer 20 in the radial direction R. The connection line of the device in the circumferential housing 200a does not need to additionally occupy space of the circumferential housing 200a in the axial direction A, or the device in the circumferential housing 200a occupies less space of the circumferential housing 200a in the axial direction A. Components in the intermediate integrated housing 30 are compactly arranged, to reduce a size of the powertrain 2 in the axial direction A and facilitate mounting and arrangement of the powertrain 2 in the electric vehicle 1.

In addition, because the connection line of the device in the circumferential housing 200a passes through the line outlet hole of the partition plate 100 and is connected to the motor controller 31 in the circumferential housing 200b, the connection line is concentrated in a middle position close to the partition plate 100 in the intermediate integrated housing 30, to reduce a risk of bumping into the connection line or scratching a harness, and improve reliability of connections of the connection line to the device in the circumferential housing 200a and the motor controller 31.

In an embodiment, an end face 101 facing the motor stator 13 of the motor 10 in the two end faces 101 is configured to fasten the resolver stator 41 of the resolver 40. The resolver rotor 42 of the resolver 40 is configured to be in transmission connection with the motor shaft 11 of the motor 10 or the input shaft of the reducer 20. The at least one line outlet hole includes a first line outlet hole 120. The first line outlet hole 120 is used for the resolver connection line between the resolver 40 and the motor controller 31 to pass through.

The resolver 40 receives, through the resolver connection line, the electric energy transmitted by the motor controller 31. The resolver connection line may enter the inner cavity of the circumferential housing 200b through the first line outlet hole 120, and be connected to the motor controller 31 through the through hole of the circumferential housing 200b.

In embodiments of this application, the resolver 40 is connected to the motor controller 31 from the circumferential housing 200b on the side of the reducer 20, to fully utilize the space between the circumferential housing 200b and the gear set of the reducer 20 in the radial direction R. The resolver connection line of the resolver 40 does not need to additionally occupy space of the circumferential housing 200a in the axial direction A, or the resolver connection line occupies less space of the circumferential housing 200a in the axial direction A. The components in the intermediate integrated housing 30 are compactly arranged, to reduce the size of the powertrain 2 in the axial direction A and facilitate mounting and arrangement of the powertrain 2 in the electric vehicle 1. In addition, because the resolver connection line of the resolver 40 passes through the first line outlet hole 120 of the partition plate 100 and is connected to the motor controller 31 in the circumferential housing 200b, the resolver connection line is concentrated in the middle position close to the partition plate 100 in the intermediate integrated housing 30, to reduce a risk of bumping into the resolver connection line or scratching a harness, and improve reliability of connections of the resolver connection line to the resolver 40 and the motor controller 31.

In an implementation, the gear set of the reducer 20 includes an input shaft driving gear. The input shaft driving gear is sleeved and fastened on the input shaft of the reducer 20. An outer diameter of the input shaft driving gear is less than an outer diameter of an input shaft bearing 21. The input shaft driving gear has a small size. There is a large gap between the input shaft driving gear and an inner wall of the circumferential housing 200b in the radial direction R. The gap is used to accommodate a part of the resolver connection line. The gap between the input shaft driving gear and the inner wall of the circumferential housing 200b is fully utilized to facilitate miniaturization of the powertrain 2.

In an implementation, in the radial direction R, a projection of the resolver connection line at least partially overlaps a projection of the input shaft driving gear. Alternatively, the projection of the resolver connection line is between the projection of the input shaft driving gear and a projection of the partition plate 100.

With reference to FIG. 4, in an embodiment, the end face 101 that is of the partition plate 100 and that faces the motor stator 13 of the motor 10 is configured to fasten the resolver stator 41 of the resolver 40. The resolver 40 is arranged between the motor stator 13 and the end face 101 in the axial direction A of the powertrain 2.

In embodiments of this application, in the axial direction A, the resolver stator 41 and the resolver rotor 42 of the resolver 40 are arranged between the motor stator 13 and the end face 101 that is of the partition plate 100 and that faces the motor stator 13. Because the resolver connection line of the resolver 40 is connected to the motor controller 31 through the first line outlet hole 120 and the inner cavity of the circumferential housing 200b, disposing the resolver 40 on a side that is of the motor stator 13 and that is close to the partition plate 100 helps reduce a length of the resolver connection line, to facilitate the connection between the resolver 40 and the motor controller 31.

In an embodiment, the end face 101 that is of the partition plate 100 and that faces the motor stator 13 of the motor 10 further includes a resolver fastening protrusion. The resolver fastening protrusion is configured to fasten the resolver stator 41 of the resolver 40. In the axial direction A of the powertrain 2, the resolver fastening protrusion protrudes from the end face 101 toward the resolver stator 41. In the axial direction A of the powertrain 2, one end of the resolver fastening protrusion is fastened to the end face 101, and the other end of the resolver fastening protrusion is configured to fasten the resolver stator 41. The resolver stator 41 may be fastened to the resolver fastening protrusion through a screw, a pin, a buckle, or the like.

In embodiments of this application, the resolver fastening protrusion is disposed, so that the resolver stator 41 is relatively fastened to the partition plate 100, to ensure that the resolver 40 normally works.

In an implementation, the resolver fastening protrusion and the partition plate 100 are an integral structure. Integrally forming the resolver fastening protrusion and the partition plate 100 improves connection strength between the resolver fastening protrusion and the partition plate 100, and is more helpful for the resolver fastening protrusion to stably fasten the resolver stator 41.

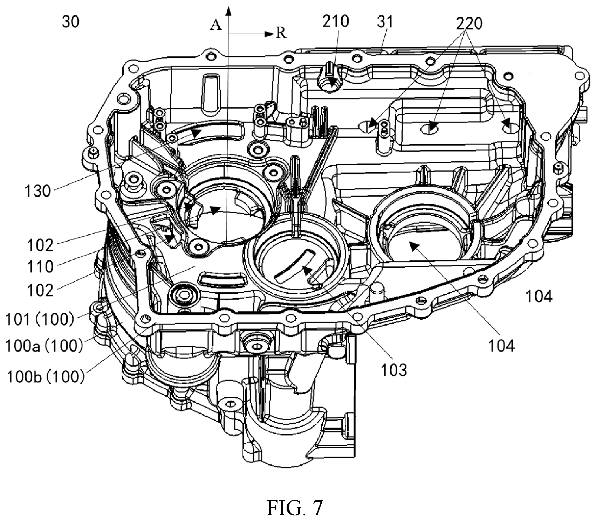

With reference to FIG. 6 and FIG. 7, in an embodiment, a distance between the first line outlet hole 120 and the shaft hole 110 is less than an inner diameter of the motor stator 13 of the motor 10 in the radial direction R of the powertrain 2, and a hole area of the first line outlet hole 120 is less than a hole area of the shaft hole 110. Generally, a distance between the motor stator 13 and the motor shaft 11 is greater than or equal to a distance between the resolver stator 41 and the motor shaft 11 in the radial direction R (with reference to FIG. 4). The motor stator 13 is arranged on an outer side that is of the resolver stator 41 and that is away from the motor shaft 11. In embodiments of this application, the first line outlet hole 120 is closer to the shaft hole 110 in the radial direction R, so that the first line outlet hole 120 is closer to the resolver stator 41, to reduce a length of a resolver connection line between the first line outlet hole 120 and the resolver stator 41, and facilitate miniaturization and neat line arrangement of the powertrain 2. In addition, the hole area of the first line outlet hole 120 is less than the hole area of the shaft hole 110, to reduce a hole area of the partition plate 100 and improve overall strength of the partition plate 100.

With reference to FIG. 4 and FIG. 7, in an embodiment, a line outlet end of the motor winding 14 of the motor 10 faces the end face 101. The at least one line outlet hole includes a second line outlet hole 130. The second line outlet hole 130 is used for the winding connection line between the motor winding 14 of the motor 10 and the motor controller 31 to pass through. The end face 101 is the end face 101 that is of the partition plate 100 and that faces the motor stator 13 of the motor 10.

The second line outlet hole 130 is used for the winding connection line of the motor winding 14 to pass through. The motor winding 14 receives, through the winding connection line, the electric energy transmitted by the motor controller 31. The winding connection line may enter the inner cavity of the circumferential housing 200b through the second line outlet hole 130, and be connected to the motor controller 31 through the through hole of the circumferential housing 200b.

In embodiments of this application, both the motor winding 14 and the resolver 40 are connected to the motor controller 31 from the circumferential housing 200b on the side of the reducer 20, to fully utilize the space between the circumferential housing 200b and the gear set of the reducer 20 in the radial direction R. The winding connection line and the resolver connection line do not need to additionally occupy space of the circumferential housing 200a in the axial direction A, or the winding connection line and the resolver connection line occupy less space of the circumferential housing 200a in the axial direction A. The components in the intermediate integrated housing 30 are compactly arranged, to reduce the size of the powertrain 2 in the axial direction A and facilitate mounting and arrangement of the powertrain 2 in the electric vehicle 1.

In addition, the winding connection line is concentrated in the middle position close to the partition plate 100 in the intermediate integrated housing 30, to reduce a risk of bumping into the winding connection line or scratching a harness, and improve reliability of connections of the winding connection line to the motor winding 14 and the motor controller 31.

Further, the second line outlet hole 130 is spaced apart from the first line outlet hole 120 and the shaft hole 110. The second line outlet hole 130 is a hole different from the first line outlet hole 120 and the shaft hole 110. The winding connection line and the resolver connection line pass through different line outlet holes, to help improve line arrangement neatness and reduce a risk of line misconnection.

With reference to FIG. 4 and FIG. 7, in an embodiment, a distance between the at least one line outlet hole and the center point of the shaft hole 110 is less than an outer diameter of the motor stator 13 of the motor 10 in the radial direction R of the powertrain 2. A distance between the first line outlet hole 120 and the center point of the shaft hole 110 is less than the outer diameter of the motor stator 13 of the motor 10. A distance between the second line outlet hole 130 and the center point of the shaft hole 110 is less than the outer diameter of the motor stator 13 of the motor 10. Generally, a distance between the line outlet end of the motor winding 14 and the center point of the shaft hole 110 is less than the outer diameter of the motor stator 13 of the motor 10, and an outer diameter of the resolver stator 41 is less than the outer diameter of the motor stator 13 of the motor 10. In embodiments of this application, the at least one line outlet hole is arranged between the shaft hole and an outer circumferential surface of the motor stator 13 in the radial direction R of the powertrain 2. This reduces lengths of the winding connection line and the resolver connection line in the circumferential housing 200a, and facilitates miniaturization and neat line arrangement of the powertrain 2. In addition, because a projection of the at least one line outlet hole is within a projection of the outer circumferential surface of the motor stator 13 in the axial direction A, the winding connection line and the resolver connection line do not additionally occupy space of the circumferential housing 200a in the radial direction R. This helps reduce a size of the circumferential housing 200a in the radial direction R, to reduce a total size of the powertrain 2.

With reference to FIG. 6 and FIG. 7, in an embodiment, the at least one line outlet hole includes the first line outlet hole 120 and the second line outlet hole 130. The second line outlet hole 130 and the first line outlet hole 120 are spaced apart in a circumferential direction of the powertrain 2. In the radial direction R of the powertrain 2, a projection of the second line outlet hole 130 does not overlap a projection of the first line outlet hole 120. In embodiments of this application, because the second line outlet hole 130 and the first line outlet hole 120 are arranged between an input shaft bearing cavity 102 and an inner wall of the circumferential housing 200a in the radial direction R, and there is limited space between the input shaft bearing cavity 102 and the inner wall of the circumferential housing 200a, arranging the second line outlet hole 130 and the first line outlet hole 120 in the circumferential direction reduces interference between the winding connection line and the winding connection line, and improves the overall strength of the partition plate 100, so that structures of the second line outlet hole 130 and the first line outlet hole 120 are not prone to damage.

With reference to FIG. 6 and FIG. 7, in an embodiment, in the radial direction R of the powertrain 2, the distance between the second line outlet hole 130 and the shaft hole 110 is greater than or equal to the distance between the first line outlet hole 120 and the shaft hole 110. Generally, a distance between the motor winding 14 and the motor shaft 11 is greater than or equal to a distance between the resolver stator 41 and the motor shaft 11 in the radial direction R (with reference to FIG. 4). The motor winding 14 is arranged on the outer side that is of the resolver stator 41 and that is away from the motor shaft 11. In embodiments of this application, the second line outlet hole 130 is farther away from the shaft hole 110 in the radial direction R, so that the second line outlet hole 130 is closer to the motor winding 14, to reduce a length of a winding connection line between the second line outlet hole 130 and the motor winding 14, and facilitate miniaturization and neat line arrangement of the powertrain 2. The first line outlet hole 120 is closer to the shaft hole 110 in the radial direction R, so that the first line outlet hole 120 is closer to the resolver stator 41, to reduce the length of the resolver connection line between the first line outlet hole 120 and the resolver stator 41, and facilitate miniaturization and neat line arrangement of the powertrain 2.

With reference to FIG. 6 and FIG. 7, in an embodiment, a hole area of the second line outlet hole 130 is greater than or equal to the hole area of the first line outlet hole 120. Generally, the motor winding 14 is connected to a strong current, and the resolver 40 is connected to a weak current. A size of the winding connection line is greater than a size of the resolver connection line. In addition, the winding connection line is usually a copper bar. In embodiments of this application, the hole area of the second line outlet hole 130 is greater than the hole area of the first line outlet hole 120, so that the winding connection line smoothly passes through the second line outlet hole 130.

With reference to FIG. 6 and FIG. 7, in an embodiment, a width of the second line outlet hole 130 in the circumferential direction of the powertrain 2 is greater than a width of the second line outlet hole 130 in the radial direction R of the powertrain 2. A width of the first line outlet hole 120 in the circumferential direction of the powertrain 2 is greater than a width of the first line outlet hole 120 in the radial direction R of the powertrain 2. In embodiments of this application, because the second line outlet hole 130 and the first line outlet hole 120 are arranged between the input shaft bearing cavity 102 and the inner wall of the circumferential housing 200a in the radial direction R, and there is limited space between the input shaft bearing cavity 102 and the inner wall of the circumferential housing 200a, increasing dimensions of the second line outlet hole 130 and the first line outlet hole 120 in the circumferential direction and reducing dimensions of the second line outlet hole 130 and the first line outlet hole 120 in the radial direction help reduce a risk of contact interference of the winding connection line and the resolver connection line with another component in the circumferential housing 200a in the radial direction R.

In an embodiment, the width of the second line outlet hole 130 in the circumferential direction of the powertrain 2 is greater than the width of the first line outlet hole 120 in the circumferential direction of the powertrain 2.

With reference to FIG. 6 and FIG. 7, in an embodiment, the at least one through hole includes a first through hole 210 and a second through hole 220. The first through hole 210 and the second through hole 220 are spaced apart in the circumferential direction and the axial direction A of the powertrain 2. The first through hole 210 is used for the resolver connection line between the resolver 40 and the motor controller 31 to pass through. The second through hole 220 is used for the winding connection line between the motor winding 14 of the motor 10 and the motor controller 31 to pass through.

In embodiments of this application, the second through hole 220 and the first through hole 210 are spaced apart. The second through hole 220 is a through hole different from the first through hole 210. The winding connection line and the resolver connection line are connected to the motor controller 31 through different through holes. Small sizes of the second through hole 220 and the first through hole 210 facilitate sealing between the circumferential housing 200b and the motor controller 31.

With reference to FIG. 7, in an embodiment, in the axial direction A of the powertrain 2, a distance between the second through hole 220 and the partition plate 100 is less than a distance between the first through hole 210 and the partition plate 100. In embodiments of this application, the second through hole 220 and the first through hole 210 are staggered in the axial direction A, to reduce space of the circumferential housing 200b occupied by the second through hole 220 and the first through hole 210 in the radial direction R. This helps reduce the size of the powertrain 2. In addition, generally, the motor winding 14 is connected to a strong current, and the resolver 40 is connected to a weak current. The winding connection line has a larger size. In addition, the winding connection line is usually a copper bar. The second through hole 220 is closer to the partition plate 100, to facilitate fastening of the winding connection line, and reduce a risk that the winding connection line interferes with the gear set of the reducer 20.

With reference to FIG. 7, in an embodiment, a quantity of second through holes 220 is greater than a quantity of first through holes 210. In addition, a distance between each second through hole 220 and the partition plate 100 is less than the distance between the first through hole 210 and the partition plate 100. For example, one first through hole 210 and three second through holes 220 are included in FIG. 7. The three second through holes 220 are respectively used for three-phase winding connection lines to pass through. Penetration directions of the three second through holes 220 are the same and perpendicular to the axial direction A. In embodiments of this application, the second through holes 220 whose quantity is greater are closer to the partition plate 100, to facilitate fastening of the winding connection line, and reduce the risk that the winding connection line interferes with the gear set of the reducer 20.

With reference to FIG. 7, in an embodiment, a penetration direction of the first through hole 210 is perpendicular to that of the second through hole 220. For example, the penetration direction of the first through hole 210 is parallel to the axial direction A, and the penetration direction of the second through hole 220 is perpendicular to the axial direction A. The first through hole 210 and the second through hole 220 have different penetration directions, to fully utilize inner walls of the circumferential housing 200b in all directions. This facilitates centralized arrangement of the first through hole 210 and the second through hole 220, to reduce the size of the powertrain 2.

With reference to FIG. 7, in an embodiment, in the radial direction R of the powertrain 2, a distance between the second through hole 220 and the shaft hole 110 is greater than or equal to a distance between the first through hole 210 and the shaft hole 110. In embodiments of this application, because the winding connection line has a larger size, and the quantity of second through holes 220 is generally greater, the second through holes 220 are away from the shaft hole 110, to facilitate arrangement of the resolver connection line between the first through hole 210 and the first line outlet hole 120, and the connection of the resolver connection line to the motor controller 31 through the first through hole 210.

With reference to FIG. 7, in an embodiment, in the axial direction A of the powertrain 2, a distance between the second through hole 220 and the shaft hole 110 is greater than or equal to a radius of one of the circumferential housings 200, and a distance between the first through hole 210 and the shaft hole 110 is greater than or equal to a radius of the circumferential housing 200b. One of the circumferential housings 200 is the circumferential housing 200a configured to accommodate the motor stator 13. In the radial direction R of the powertrain, a width of the circumferential housing 200a is less than a width of the circumferential housing 200b. The motor controller 31 is mainly integrated or fastened to the circumferential housing 200b away from the circumferential housing 200a, to help reduce a size of the motor controller 31. The second through hole 220 and the first through hole 210 are provided in a part that is of the circumferential housing 200b and that is away from the circumferential housing 200a. Short connection paths from the second through hole 220 and the first through hole 210 to the motor controller 31 facilitate the connections of the winding connection line and the resolver connection line to the motor controller 31, and sealing between the inner cavity of the circumferential housing 200b and the inner cavity of the motor controller 31.

With reference to FIG. 6 and FIG. 7, in an embodiment, the other end face 101 away from the motor stator 13 in the two end faces 101 of the partition plate 100 includes the input shaft bearing cavity 102. The input shaft bearing cavity 102 is configured to fasten an outer ring of the input shaft bearing 21. An inner ring of the input shaft bearing 21 is configured to be in transmission connection with the input shaft of the reducer 20. The shaft hole 110 is coaxially arranged with the input shaft bearing cavity 102.

The input shaft bearing 21 is configured to bear a load transmitted by the input shaft of the reducer 20 to the partition plate 100. The input shaft of the reducer 20 is rotatably connected to the partition plate 100 through the input shaft bearing 21. An opening of the input shaft bearing cavity 102 faces the circumferential housing 200b.

In embodiments of this application, the resolver 40 and the input shaft bearing cavity 102 are respectively disposed on the two opposite end faces 101, to facilitate neat component arrangement of the powertrain 2 and maintenance of the powertrain 2.

With reference to FIG. 6 and FIG. 7, in an embodiment, the other end face 101 away from the motor stator 13 in the two end faces 101 of the partition plate 100 includes the input shaft bearing cavity 102, an intermediate shaft bearing cavity 103, and an output shaft bearing cavity 104. The intermediate shaft bearing cavity 103 is configured to fasten an outer ring of an intermediate shaft bearing. An inner ring of the intermediate shaft bearing is configured to be in transmission connection with an intermediate shaft of the reducer 20. The output shaft bearing cavity 104 is configured to fasten an outer ring of the intermediate shaft bearing. The inner ring of the output shaft bearing is configured to be in transmission connection with an output shaft of the reducer 20. A distance between the output shaft bearing cavity 104 and the shaft hole 110 is greater than a distance between the intermediate shaft bearing cavity 103 and the shaft hole 110. A distance between the at least one line outlet hole and the input shaft bearing cavity 102 is less than a distance between the at least one line outlet hole and the output shaft bearing cavity 104.

For example, the gear set of the reducer 20 includes an input shaft gear set, an intermediate shaft gear set, and an output shaft gear set. The input shaft gear set includes the input shaft of the reducer 20 and the input shaft driving gear. The input shaft of the reducer 20 is rotatably connected to the partition plate 100 through the input shaft bearing 21. The outer ring of the input shaft bearing 21 is fastened to the input shaft bearing cavity 102.

The intermediate shaft gear set includes the intermediate shaft of the reducer 20, the intermediate shaft bearing, an intermediate shaft driven gear, and an intermediate shaft driving gear. The intermediate shaft driven gear and the intermediate shaft driving gear are fastened and sleeved on the intermediate shaft of the reducer 20. The intermediate shaft driven gear and the intermediate shaft driving gear are spaced apart in an axial direction of the intermediate shaft. The intermediate shaft of the reducer 20 and the input shaft of the reducer 20 are spaced apart in a radial direction R of the input shaft of the reducer 20. The intermediate shaft of the reducer 20 is rotatably connected to the partition plate 100 through the intermediate shaft bearing. The outer ring of the intermediate shaft bearing is fastened to the intermediate shaft bearing cavity 103. The intermediate shaft driven gear is configured to engage with the input shaft driving gear in a radial direction R of the input shaft driving gear.

The output shaft gear set includes the output shaft of the reducer 20, the output shaft bearing, and an output shaft driven gear. The output shaft driven gear is fastened and sleeved on the output shaft of the reducer 20. The output shaft of the reducer 20 and the intermediate shaft of the reducer 20 are spaced apart in a radial direction R of the intermediate shaft of the reducer 20. The output shaft of the reducer 20 is rotatably connected to the partition plate 100 through the output shaft bearing. The outer ring of the output shaft bearing is fastened to the output shaft bearing cavity 104. The output shaft driven gear is configured to engage with the intermediate shaft driving gear in a radial direction R of the intermediate shaft driving gear.

The power output by the motor shaft 11 sequentially passes through the input shaft of the reducer 20, the input shaft driving gear, the intermediate shaft driven gear, the intermediate shaft, the intermediate shaft driving gear, the output shaft driven gear, and the output shaft of the reducer 20, and is transmitted to the wheel 4 through the output shaft of the reducer 20.

In embodiments of this application, the at least one line outlet hole, such as the first line outlet hole 120 and the second line outlet hole 130, is arranged on a circumferential side that is of the input shaft bearing cavity 102 and that is away from the output shaft bearing cavity 104, to facilitate neat arrangement of the resolver connection line and the winding connection line in the circumferential housing 200b, and reduce a risk that the resolver connection line and the winding connection line interfere with the gear set of the reducer 20.

In an embodiment, a distance between the first line outlet hole 120 and the input shaft bearing cavity 102 is less than a distance between the first line outlet hole 120 and the intermediate shaft bearing cavity 103, and less than a distance between the first line outlet hole 120 and the output shaft bearing cavity 104. A distance between the second line outlet hole 130 and the input shaft bearing cavity 102 is less than a distance between the second line outlet hole 130 and the intermediate shaft bearing cavity 103, and less than a distance between the second line outlet hole 130 and the output shaft bearing cavity 104. The input shaft bearing cavity 102 and the intermediate shaft bearing cavity 103 are spaced apart in a radial direction R of the intermediate shaft bearing cavity 103. The intermediate shaft bearing cavity 103 and the output shaft bearing cavity 104 are spaced apart in the radial direction R of the intermediate shaft bearing cavity 103.

In embodiments of this application, the first line outlet hole 120 and the second line outlet hole 130 are arranged on a circumferential side that is of the input shaft bearing cavity 102 and that is away from the intermediate shaft bearing cavity 103 and the output shaft bearing cavity 104, to facilitate neat arrangement of the resolver connection line and the winding connection line in the circumferential housing 200b, and reduce the risk that the resolver connection line and the winding connection line interfere with the gear set of the reducer 20.

In an embodiment, the shaft hole 110, the input shaft bearing cavity 102, and the first line outlet hole 120 are arranged in the radial direction R of the powertrain 2. In embodiments of this application, in the radial direction R of the powertrain 2, the first line outlet hole 120 is arranged on an outer side of the input shaft bearing cavity 102. The distance between the first line outlet hole 120 and the center of the shaft hole 110 is greater than an outer diameter of the input shaft bearing cavity 102. In the axial direction A of the powertrain 2, a projection of the first line outlet hole 120 does not overlap a projection of the input shaft bearing cavity 102. A position of the first line outlet hole 120 is kept away from the input shaft bearing cavity 102, to facilitate a smooth connection of the resolver connection line in the circumferential housing 200b to the motor controller 31.

With reference to FIG. 6 and FIG. 7, in an embodiment, the shaft hole 110, the input shaft bearing cavity 102, and the second line outlet hole 130 are arranged in the radial direction R of the powertrain 2. In embodiments of this application, in the radial direction R of the powertrain 2, the second line outlet hole 130 is arranged on the outer side of the input shaft bearing cavity 102. The distance between the second line outlet hole 130 and the center of the shaft hole 110 is greater than the outer diameter of the input shaft bearing cavity 102. In the axial direction A of the powertrain 2, a projection of the second line outlet hole 130 does not overlap the projection of the input shaft bearing cavity 102. A position of the second line outlet hole 130 is kept away from the input shaft bearing cavity 102, to facilitate a smooth connection of the winding connection line in the circumferential housing 200b to the motor controller 31. With reference to FIG. 6 and FIG. 7, in an embodiment, the second line outlet hole 130, the first line outlet hole 120, and the intermediate shaft bearing cavity 103 are sequentially spaced apart in the circumferential direction of the powertrain 2. The second line outlet hole 130, the first line outlet hole 120, and the intermediate shaft bearing cavity 103 are all disposed around the input shaft bearing cavity 102. In the radial direction R of the powertrain 2, the projection of the second line outlet hole 130, the projection of the first line outlet hole 120, and a projection of the intermediate shaft bearing cavity 103 do not overlap. The first line outlet hole 120 and the second line outlet hole 130 are arranged on a circumferential side that is of the input shaft bearing cavity 102 and that is away from the intermediate shaft bearing cavity 103, to facilitate neat arrangement of the resolver connection line and the winding connection line in the circumferential housing 200b, and reduce the risk that the resolver connection line and the winding connection line interfere with the gear set of the reducer 20.

With reference to FIG. 6 and FIG. 7, in an embodiment, the distance between the first line outlet hole 120 and the intermediate shaft bearing cavity 103 is less than a distance between the second line outlet hole 130 and the intermediate shaft bearing cavity 103. Generally, in the radial direction R of the powertrain 2, as shown in an up-down direction in FIG. 6, a distance between the intermediate shaft bearing cavity 103 and the motor controller 31 is greater than a distance between the input shaft bearing cavity 102 and the motor controller 31. The resolver connection line between the first line outlet hole 120 and the first through hole 210 is usually a cable. The winding connection line between the second line outlet hole 130 and the second through hole 220 is usually a copper bar. In embodiments of this application, a larger distance between the second line outlet hole 130 and the intermediate shaft bearing cavity 103 leads to a smaller distance between the second line outlet hole 130 and the motor controller 31, to facilitate arrangement of the winding connection line between the second line outlet hole 130 and the second through hole 220. A smaller distance between the first line outlet hole 120 and the intermediate shaft bearing cavity 103 leads to a larger distance between the first line outlet hole 120 and the motor controller 31. However, the resolver connection line in a form of a cable has good bendability, so that the resolver connection line between the first line outlet hole 120 and the first through hole 210 can also be smoothly arranged.

With reference to FIG. 6 and FIG. 7, in an embodiment, the first line outlet hole 120 and the second line outlet hole 130 are respectively distributed on two sides of a connection line between a center of the input shaft bearing cavity 102 and a center of the intermediate shaft bearing cavity 103. The first line outlet hole 120 and the second line outlet hole 130 are arranged on the circumferential side that is of the input shaft bearing cavity 102 and that is away from the intermediate shaft bearing cavity 103. In addition, the first line outlet hole 120 and the second line outlet hole 130 are respectively arranged on the two sides of the connection line between the center of the input shaft bearing cavity 102 and the center of the intermediate shaft bearing cavity 103. In this way, both the first line outlet hole 120 and the second line outlet hole 130 can be closer to the inner wall of the circumferential housing 200b in the radial direction R of the powertrain 2, to facilitate neat arrangement of the resolver connection line and the winding connection line in the circumferential housing 200b, and reduce the risk that the resolver connection line and the winding connection line interfere with the gear set of the reducer 20.

In an implementation, the distance between the first line outlet hole 120 and the intermediate shaft bearing cavity 103 is less than the distance between the first line outlet hole 120 and the output shaft bearing cavity 104. The distance between the second line outlet hole 130 and the intermediate shaft bearing cavity 103 is less than the distance between the second line outlet hole 130 and the output shaft bearing cavity 104.

In an embodiment, the other end face that is of the partition plate 100 and that is away from the motor stator 13 includes a harness fastener. The harness fastener is configured to neatly fasten the resolver connection line in the circumferential housing 200b. In the circumferential direction of the powertrain 2, the harness fastener is arranged between the first line outlet hole 120 and the second line outlet hole 130. In an implementation, the harness fastener may include a connector. The connector is connected to the motor controller 31. The resolver connection line passing through the first line outlet hole 120 to the circumferential housing 200b may be plugged into the connector, to implement the connection between the resolver 40 and the motor controller 31.

With reference to FIG. 4 and FIG. 6, in an embodiment, the motor 10 further includes the motor winding 14. The inner cavity of one of the circumferential housings 200 is further configured to accommodate the motor winding 14. In the axial direction A of the powertrain 2, the projection of the second line outlet hole 130 at least partially overlaps a projection of the motor winding 14. Alternatively, in the radial direction R, the projection of the second line outlet hole 130 is within a projection of the motor winding 14. One of the circumferential housings 200 is the circumferential housing 200a that accommodates the motor stator 13.

In embodiments of this application, if the projection of the second line outlet hole 130 in the axial direction A at least partially overlaps the projection of the motor winding 14 in the axial direction A, the second line outlet hole 130 and the motor winding 14 are arranged in a straight line or an approximately straight line in the axial direction A, to reduce the length of the winding connection line between the second line outlet hole 130 and the motor winding 14, and facilitate miniaturization and neat line arrangement of the powertrain 2. In addition, the winding connection line between the second line outlet hole 130 and the motor winding 14 is usually a copper bar, and the second line outlet hole 130 and the motor winding 14 are arranged in a straight line or an approximately straight line, so that the copper bar between the second line outlet hole 130 and the motor winding 14 does not need to be bent or is slightly bent, to reduce a risk of bending and breaking the copper bar, and improve reliability of the connection between the motor winding 14 and the motor controller 31.

If the projection of the second line outlet hole 130 is within the projection of the motor winding 14 in the radial direction R, the line outlet end of the motor winding 14 may be disposed on an inner side of the motor winding 14, to reduce the size of the powertrain 2 in the axial direction A.

With reference to FIG. 4 and FIG. 6, in an embodiment, the first line outlet hole 120 is arranged between the motor winding 14 and the shaft hole 110 in the radial direction R of the powertrain 2. In the radial direction R of the powertrain 2, the distance between the first line outlet hole 120 and the shaft hole is less than a distance between the motor winding 14 and the shaft hole. In embodiments of this application, the resolver connection line accommodated in the circumferential housing 200a is arranged between the motor winding 14 and the shaft hole 110 in the radial direction R. In the axial direction A of the powertrain 2, a projection of the resolver connection line does not overlap the projection of the motor winding 14. The resolver connection line and the motor winding 14 as a whole occupy small space in the axial direction, to reduce the size of the powertrain 2 in the axial direction A.

With reference to FIG. 4, in an embodiment, the motor shaft 11, the resolver 40, and the motor winding 14 are sequentially arranged in the radial direction R of the powertrain 2. In the radial direction R of the powertrain 2, a projection of the resolver 40 at least partially overlaps the projection of the motor winding 14.

The motor stator 13 includes a plurality of winding grooves. The winding grooves penetrate the motor stator 13 in an axial direction A of the motor 10. The motor winding 14 is mounted on the motor stator 13. A part of the motor winding 14 is accommodated in the winding grooves. The other part of the motor winding 14 is outside the winding grooves and exposed at two ends of the motor stator 13 in the axial direction A. In the axial direction A of the motor 10, a length of the motor winding 14 is greater than a length of the motor stator 13 and greater than a length of the motor rotor 12. In the axial direction A of the motor 10, a distance between the motor winding 14 and the partition plate 100 is less than a distance between the motor stator 13 and the partition plate 100, and less than a distance between the motor rotor 12 and the partition plate 100.

In embodiments of this application, because an end part of the motor winding 14 protrudes from the motor stator 13 and the motor rotor 12, there is accommodating space between the motor winding 14 and the motor shaft 11 in a radial direction R of the motor 10. The resolver 40 is accommodated in the accommodating space. In embodiments of this application, the accommodating space between the motor winding 14 and the motor shaft 11 is fully utilized. In the radial direction R of the motor 10, the resolver 40 is mounted between the motor winding 14 exposed from the motor stator 13 and the motor shaft 11. The resolver 40 does not need to additionally occupy space of the motor shaft 11 in the axial direction A, or the resolver 40 occupies less space of the motor shaft 11 in the axial direction A. Components in the circumferential housing 200a are compactly arranged, to reduce a size of the circumferential housing 200a in the axial direction A and facilitate miniaturization of the powertrain 2.

In an embodiment, in the radial direction R of the powertrain 2, a projection of the input shaft bearing cavity 102 at least partially overlaps the projection of the motor winding 14. The input shaft bearing cavity 102 is recessed from one of the end faces 101 toward the other end face 101. One of the end faces 101 is an end face facing the circumferential housing 200b. The input shaft bearing cavity 102 occupies some accommodating space between the motor winding 14 and the motor shaft 11, to reduce a size of the circumferential housing 200b in the axial direction A and facilitate miniaturization of the powertrain 2.

In an embodiment, in the radial direction R of the powertrain 2, the projection of the input shaft bearing cavity 102 at least partially overlaps a projection of the winding connection line accommodated in the circumferential housing 200a. The input shaft bearing cavity 102 is recessed from one of the end faces 101 toward the other end face 101, so that the input shaft bearing cavity 102 occupies some space between the winding connection line and the motor shaft 11, to reduce the size of the circumferential housing 200b in the axial direction A and facilitate miniaturization of the powertrain 2.

With reference to FIG. 5 and FIG. 7, in an embodiment, the powertrain further includes a housing of the motor controller 31. An inner cavity of the housing of the motor controller 31 is configured to communicate with the inner cavity of the other circumferential housing 200 through the first through hole 210 and the second through hole 220. In an arrangement direction of the housing of the motor controller 31 and the partition plate 100, a distance between the first line outlet hole 120 and the housing of the motor controller 31 is greater than a distance between the second line outlet hole 130 and the housing of the motor controller 31. The other circumferential housing 200 is the circumferential housing 200b that accommodates the gear set of the reducer 20. As shown in FIG. 6, the housing of the motor controller 31 is integrated above the circumferential housing 200b.

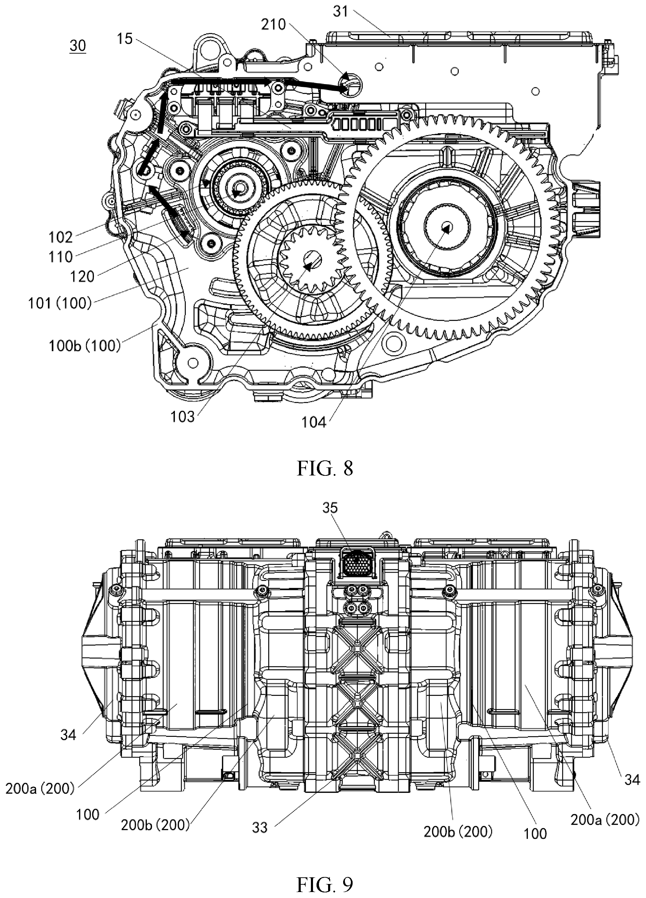

In embodiments of this application, the second line outlet hole 130 is closer to the motor controller 31 in the arrangement direction of the housing of the motor controller 31 and the partition plate 100, to facilitate arrangement of the winding connection line between the second line outlet hole 130 and the second through hole 220. Generally, the winding connection line between the second line outlet hole 130 and the second through hole 220 is usually a copper bar. The copper bar between the second line outlet hole 130 and the second through hole 220 does not need to be bent or is slightly bent to connect the motor winding 14 to the motor controller 31. As shown in FIG. 8, the winding connection line passing through the second line outlet hole 130 is connected to the motor controller 31 through a straight copper bar 15. In addition, because the resolver connection line between the first line outlet hole 120 and the first through hole 210 is usually a cable, and the cable has good bendability, the resolver connection line can smoothly connect the resolver 40 to the motor controller 31 in spite of the larger distance between the first line outlet hole 120 and the motor controller 31. For example, in a direction indicated by arrows in FIG. 8, the resolver connection line passing through the first line outlet hole 120 may be wound around the outer side of the input shaft bearing cavity 102 to above the second line outlet hole 130, and then connected to the motor controller 31 through the first through hole 210.

In an embodiment, in the arrangement direction of the housing of the motor controller 31 and the partition plate 100, a distance between the second line outlet hole 130 and the second through hole 220 is less than a distance between the first line outlet hole 120 and the first through hole 210. This facilitates neat arrangement of the resolver connection line and the winding connection line in the circumferential housing 200b.

In an embodiment, at least a part of the housing of the motor controller 31 and the intermediate integrated housing 30 are an integral structure. The at least a part of the housing of the motor controller 31 and the intermediate integrated housing 30 are integrally die-cast, to improve connection strength between the at least a part of the housing of the motor controller 31 and the intermediate integrated housing 30.

With reference to FIG. 5 and FIG. 7, in an embodiment, a part of the housing of the motor controller 31 is integrated into the circumferential housing 200b, and the housing of the motor controller 31 and the circumferential housing 200b have a shared housing. In embodiments of this application, the first through hole 210 and the second through hole 220 are provided in the shared housing between the housing of the motor controller 31 and the circumferential housing 200b. Sealing is needed between the housing of the motor controller 31 and the circumferential housing 200b. Sealing between the housing of the motor controller 31 and the circumferential housing 200b can be implemented through sealing between the resolver connection line and a hole wall of the first through hole 210 and sealing between the winding connection line and a hole wall of the second through hole 220. A sealing operation is simple, and sealing reliability is high.

In an implementation, the circumferential housing 200b includes a boss. The boss protrudes from the inner wall of the circumferential housing 200b in a direction away from the housing of the motor controller 31. An outer wall of the boss forms an inner wall of the housing of the motor controller 31. The boss is disposed to reduce a gap between the gear set of the reducer 20 and the circumferential housing 200b. Reduced space is used to dispose the motor controller 31, to reduce a size of the powertrain 2 in the arrangement direction of the housing of the motor controller 31 and the partition plate 100.

In an implementation, in the arrangement direction of the housing of the motor controller 31 and the partition plate 100, a projection of the housing of the motor controller 31 at least partially overlaps a projection of the circumferential housing 200b. In the axial direction A of the powertrain 2, a projection of the housing of the motor controller 31 at least partially overlaps a projection of the circumferential housing 200b. Components in the powertrain 2 are compactly arranged with high space utilization, to reduce a volume of the powertrain 2.

With reference to FIG. 3 and FIG. 4, in an embodiment, the powertrain 2 includes the other motor 10, the other reducer 20, the other intermediate integrated housing 30, one middle partition plate 33, and two end plates 34. The middle partition plate 33 is configured to fasten the other circumferential housing 200 in the intermediate integrated housing 30 to form one reducer accommodating cavity. The reducer accommodating cavity is configured to accommodate the reducer 20. The middle partition plate 33 is configured to fasten the other circumferential housing 200 in the other intermediate integrated housing 30 to form the other reducer accommodating cavity. The other reducer accommodating cavity is configured to accommodate the other reducer 20. One of the end plates 34 is configured to fasten one of the circumferential housings 200 in the intermediate integrated housing 30 to form one motor accommodating cavity. The motor accommodating cavity is configured to accommodate the motor 10. The other end plate 34 is configured to fasten one of the circumferential housings 200 in the other intermediate integrated housing 30 to form the other motor accommodating cavity. The other motor accommodating cavity is configured to accommodate the other motor 10.

One of the end plates 34, the circumferential housing 200a in the intermediate integrated housing 30, the partition plate 100 in the intermediate integrated housing 30, the circumferential housing 200b in the intermediate integrated housing 30, the middle partition plate 33, the circumferential housing 200b in the other intermediate integrated housing 30, the partition plate 100 in the other intermediate integrated housing 30, the circumferential housing 200a in the other intermediate integrated housing 30, and the other end plate 34 are sequentially arranged in the axial direction A of the powertrain 2.

The middle partition plate 33 may be fastened to the two intermediate integrated housings 30 through a bolt, a pin, or the like. The middle partition plate 33 may be a flat plate. In an implementation, two end faces of the middle partition plate 33 in the axial direction A include grooves. After the middle partition plate 33 is mounted on the two intermediate integrated housings 30, an inner cavity of one groove communicates with an inner cavity of one circumferential housing 200b, to form one reducer accommodating cavity. The reducer accommodating cavity is configured to accommodate the gear set of the reducer 20.

In embodiments of this application, two motors 10 and two reducers 20 are integrated into the powertrain 2, so that an integration level of the powertrain 2 can be increased, to reduce a volume and costs, facilitate a lightweight design of the powertrain 2, and improve power density.

It should be noted that for structures and position arrangement relationships of the other motor 10, the other reducer 20, and the other intermediate integrated housing 30, refer to the foregoing descriptions of the intermediate integrated housing 30, the motor 10, and the reducer 20. Details are not described herein again.

In an embodiment, the powertrain 2 includes the other resolver 40. An end face that is of the partition plate 100 in the other intermediate integrated housing 30 and that faces a motor stator of the other motor 13 is configured to fasten the other resolver 40. In the axial direction A of the powertrain 2, a distance between the resolver 40 and the other resolver 40 is greater than a distance between the partition plate 100 in the intermediate integrated housing 30 and the partition plate 100 in the other intermediate integrated housing 30, and less than a distance between the motor stator 13 of the motor 10 and the motor stator 13 of the other motor 10.

In the axial direction A of the powertrain 2, the two resolvers 40 are arranged on inner sides of the two motor stators 13 and on outer sides of the two partition plates 100. The two resolvers 40 both have their lines coming out from inner sides of the two partition plates 100, namely, sides of the reducers 20. Resolver connection lines of the two resolvers 40 are respectively connected to motor controllers 31 through inner cavities of the two circumferential housings 200b. This helps reduce a length of the powertrain 2 in the axial direction and improve adaptability of the powertrain 2. In addition, arranging the resolver connection lines of the two resolvers 40 on the inner sides of the two motor stators 13 reduces a risk of bumping into the resolver connection lines or scratching a harness, and improves reliability of connections of the resolver connection lines to the resolvers 40 and the motor controllers 31.

In an embodiment, in the axial direction A of the powertrain 2, a projection of the shaft hole 110 of the partition plate 100 at least partially overlaps a projection of the shaft hole 110 of the other partition plate 100, and a projection of the first line outlet hole 120 of the partition plate 100 at least partially overlaps a projection of the first line outlet hole 120 of the other partition plate 100. The shaft holes 110 of the two partition plates 100 are symmetrical. The first line outlet holes 120 of the two partition plates 100 are also symmetrical. This can optimize an internal layout of the powertrain 2 and facilitates mounting and arrangement of devices in the powertrain 2.

In an implementation, in the axial direction A of the powertrain 2, a projection of the second line outlet hole 130 of the partition plate 100 at least partially overlaps a projection of the second line outlet hole 130 of the other partition plate 100. The second line outlet holes 130 of the two partition plates 100 are symmetrical. This can optimize the internal layout of the powertrain 2.

In an implementation, the powertrain 2 includes the intermediate integrated housing 30. The circumferential housing 200a in the intermediate integrated housing 30 accommodates the motor stator 13 and the motor rotor 12 of the motor 10, and the resolver stator 41 and the resolver rotor 42 of the resolver 40. The circumferential housing 200b in the intermediate integrated housing 30 accommodates the gear set of the reducer 20. The powertrain 2 further includes a motor end cover and a reducer end cover. The motor end cover and the reducer end cover are arranged on two sides of the intermediate integrated housing 30 in the axial direction A of the powertrain. The motor end cover is configured to be fastened to an end face that is of the circumferential housing 200a and that is away from the partition plate 100 in the axial direction A. The reducer end cover is configured to be fastened to an end face that is of the circumferential housing 200b and that is away from the partition plate 100 in the axial direction A.

With reference to FIG. 3 and FIG. 4, this application provides a powertrain 2 integrating two motors. The powertrain 2 includes two motors 10, two reducers 20, two resolvers 40, two intermediate integrated housings 30, and a middle partition plate 33. Each of the intermediate integrated housings 30 includes two circumferential housings 200 and one partition plate 100 that are integrally die-cast. The two circumferential housings 200 in each of the intermediate integrated housings 30 are arranged in an axial direction A of the powertrain 2. One of the circumferential housings 200 is configured to fasten a motor stator 13 of one of the motors 10 and accommodate a motor rotor 12 of the motor 10. The other circumferential housing 200 is configured to accommodate a gear set of one of the reducers 20. The middle partition plate 33 includes two mounting faces in the axial direction A of the powertrain 2. Each of the mounting faces is configured to fasten the other circumferential housing 200 in one of the intermediate integrated housings 30. The other circumferential housing 200 in each of the intermediate integrated housings 30 includes at least one through hole. The at least one through hole penetrates the other circumferential housing 200. The partition plate 100 in each of the intermediate integrated housings 30 includes one shaft hole 110, at least one line outlet hole, and two end faces 101 opposite to each other in the axial direction of the powertrain. The shaft hole 110 and the at least one line outlet hole are used for communication between inner cavities of the two circumferential housings 200 in the same intermediate integrated housing 30. Each shaft hole 110 is coaxially arranged with an input shaft of one of the reducers 20 or a motor shaft 11 of one of the motors 10. A distance between the at least one line outlet hole and a center point of the shaft hole 110 is greater than an inner diameter of a resolver stator 41 of one of the resolvers 40.

In embodiments of this application, two motors 10 and two reducers 20 are integrated into the powertrain 2, so that an integration level of the powertrain 2 can be increased, to reduce a volume and costs, facilitate a lightweight design of the powertrain 2, and improve power density.

In embodiments of this application, a device in each circumferential housing 200a is connected to a motor controller 31 from the circumferential housing 200b on a side of the reducer 20, to fully utilize space between the circumferential housing 200b and the gear set of the reducer 20 in a radial direction R. A connection line of the device in each circumferential housing 200a does not need to additionally occupy space of the circumferential housing 200a in the axial direction A, or the device in each circumferential housing 200a occupies less space of the circumferential housing 200a in the axial direction A. Components in each intermediate integrated housing 30 are compactly arranged, to reduce a size of the powertrain 2 in the axial direction A and facilitate mounting and arrangement of the powertrain 2 in the electric vehicle 1.

In addition, because the connection line of the device in each circumferential housing 200a passes through the line outlet hole of the partition plate 100 and is connected to the motor controller 31 in the circumferential housing 200b, the connection line is concentrated in a middle position of the powertrain 2 in the axial direction A, to reduce a risk of bumping into the connection line or scratching a harness, and improve reliability of connections of the connection line to the device in the circumferential housing 200a and the motor controller 31.

With reference to FIG. 3 and FIG. 9, in an embodiment, the powertrain 2 further includes a motor controller housing. The motor controller housing includes a control signal connector mounting hole 35 and a high-voltage direct current connector mounting hole 36. The control signal connector mounting hole 35 is used to fasten a control signal connector. The control signal connector is configured to transmit a control signal to the motor controller 31. The high-voltage direct current connector mounting hole 36 is used to fasten a high-voltage direct current connector. The high-voltage direct current connector is configured to receive power supplied by a power battery. The control signal connector mounting hole 35 and the high-voltage direct current connector mounting hole 36 are oppositely arranged in a direction perpendicular to the axial direction A of the powertrain 2. In the direction in which the control signal connector mounting hole 35 and the high-voltage direct current connector mounting hole 36 are oppositely arranged, the control signal connector mounting hole 35 and the high-voltage direct current connector mounting hole 36 penetrate the housing of the motor controller 31.

In embodiments of this application, the control signal connector mounting hole 35 and the high-voltage direct current connector mounting hole 36 are arranged on two sides in the direction perpendicular to the axial direction A, to help reduce the size of the powertrain 2.

In an embodiment, the at least one through hole of the other circumferential housing 200 in each of the intermediate integrated housings 30 is used for communication between an inner cavity of the housing of the motor controller 31 and the inner cavity of the other circumferential housing 200. In the axial direction A of the powertrain 2, the at least one through hole of the other circumferential housing 200 in one of the intermediate integrated housings 30 and the at least one through hole of the other circumferential housing 200 in the other intermediate integrated housing 30 are respectively arranged on two sides of the middle partition plate 33.

In embodiments of this application, in each of the intermediate integrated housings 30, the at least one through hole is closer to the partition plate 100, to help reduce lengths of a resolver connection line and a winding connection line, and improve line arrangement neatness of the powertrain 2.

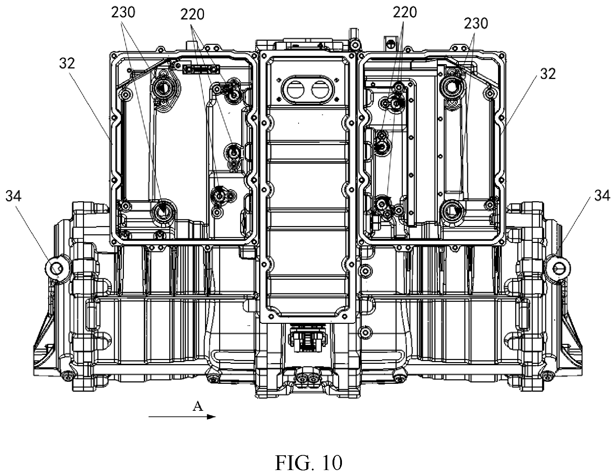

With reference to FIG. 10, in an embodiment, the powertrain 2 includes two end plates 34. The housing of the motor controller 31 includes two side faces 32. The two side faces 32 are oppositely arranged in the axial direction A of the powertrain 2. The two end plates 34 are oppositely arranged in the axial direction A of the powertrain. A distance between the two side faces 32 is less than a distance between the two end plates 34 in the axial direction A of the powertrain. One of the end plates 34 is configured to fasten one of the circumferential housings 200 in one of the intermediate integrated housings 30 to form one motor accommodating cavity. The motor accommodating cavity is configured to accommodate one of the motors 10. The other end plate 34 is configured to fasten one of the circumferential housings 200 in the other intermediate integrated housing 30 to form the other motor accommodating cavity. The other motor accommodating cavity is configured to accommodate the other motor 10.

One of the circumferential housings 200 is the circumferential housing 200a that accommodates the motor stator 13.

In embodiments of this application, a layout of the winding connection line, the resolver connection line, the resolver 40, and the like are replanned, so that components in the powertrain 2 are arranged more compactly and neatly. The distance between the two side faces 32 is less than the distance between the two end plates 34 in the axial direction A, so that a size of the housing of the motor controller 31 can be reduced, to facilitate miniaturization of the powertrain 2.

With reference to FIG. 10, in an embodiment, the housing of the motor controller 31 further includes at least two liquid ports 230. The at least two liquid ports include a liquid inlet and a liquid outlet. The liquid inlet is used to deliver coolant to the motor controller 31, to cool the motor controller 31. The liquid outlet is used to drain the coolant. The at least two liquid ports 230 and the at least one through hole are spaced apart.

The foregoing describes in detail a powertrain with lines coming out from a side of a reducer, a dual-motor powertrain, and an electric vehicle provided in embodiments of this application. In this specification, specific examples are used to describe principles and embodiments of this application. The foregoing embodiments are merely used to help understand the technical solutions of this application. In addition, a person of ordinary skill in the art may make modifications to specific embodiments and the application scope based on the idea of this application. In conclusion, the content of this specification shall not be construed as a limitation on this application.

## Claims

1. A powertrain with lines coming out from a side of a reducer, wherein the powertrain comprises one intermediate integrated housing, one resolver, one motor, and one reducer, the motor is configured to be driven by a motor controller to actuate the reducer, and the intermediate integrated housing comprises two circumferential housings and one partition plate that are integrally die-cast;
the two circumferential housings are arranged in an axial direction of the powertrain, one of the circumferential housings is configured to fasten a motor stator of the motor and accommodate a motor rotor of the motor, the other circumferential housing is configured to accommodate a gear set of the reducer, the other circumferential housing comprises at least one through hole, and the at least one through hole penetrates the other circumferential housing; and
the partition plate is configured to separate inner cavities of the two circumferential housings, the partition plate comprises one shaft hole, at least one line outlet hole, and two end faces opposite to each other in the axial direction of the powertrain, the shaft hole and the at least one line outlet hole are used for communication between the inner cavities of the two circumferential housings, the shaft hole is coaxially arranged with an input shaft of the reducer or a motor shaft of the motor, and a distance between the at least one line outlet hole and a center point of the shaft hole is greater than an inner diameter of a resolver stator of the resolver.

2. The powertrain according to claim 1, wherein an end face facing the motor stator of the motor in the two end faces is configured to fasten the resolver stator of the resolver, a resolver rotor of the resolver is configured to be in transmission connection with the motor shaft of the motor or the input shaft of the reducer, the at least one line outlet hole comprises a first line outlet hole, and the first line outlet hole is used for a resolver connection line between the resolver and the motor controller to pass through.

3. The powertrain according to claim 2, wherein a distance between the first line outlet hole and the shaft hole is less than an inner diameter of the motor stator of the motor in a radial direction of the powertrain, and a hole area of the first line outlet hole is less than a hole area of the shaft hole.

4. The powertrain according to any one of claims 1 to 3, wherein a line outlet end of a motor winding of the motor faces the end face, the at least one line outlet hole comprises a second line outlet hole, and the second line outlet hole is used for a winding connection line between the motor winding of the motor and the motor controller to pass through.

5. The powertrain according to claim 4, wherein a distance between the at least one line outlet hole and the center point of the shaft hole is less than an outer diameter of the motor stator of the motor in the radial direction of the powertrain.

6. The powertrain according to any one of claims 1 to 5, wherein the at least one line outlet hole comprises the first line outlet hole and the second line outlet hole, the second line outlet hole and the first line outlet hole are spaced apart in a circumferential direction of the powertrain, a distance between the second line outlet hole and the shaft hole is greater than or equal to the distance between the first line outlet hole and the shaft hole in the radial direction of the powertrain, and a hole area of the second line outlet hole is greater than or equal to the hole area of the first line outlet hole.

7. The powertrain according to any one of claims 1 to 6, wherein the at least one through hole comprises a first through hole and a second through hole, and the first through hole and the second through hole are spaced apart in the circumferential direction and the axial direction of the powertrain;
in the axial direction of the powertrain, a distance between the second through hole and the partition plate is less than a distance between the first through hole and the partition plate; and
in the radial direction of the powertrain, a distance between the second through hole and the shaft hole is greater than or equal to a distance between the first through hole and the shaft hole.

8. The powertrain according to any one of claims 1 to 7, wherein the other end face away from the motor stator in the two end faces comprises an input shaft bearing cavity, an intermediate shaft bearing cavity, and an output shaft bearing cavity;
the input shaft bearing cavity is configured to fasten an outer ring of an input shaft bearing, an inner ring of the input shaft bearing is configured to be in transmission connection with the input shaft of the reducer, and the shaft hole is coaxially arranged with the input shaft bearing cavity;
the intermediate shaft bearing cavity is configured to fasten an outer ring of an intermediate shaft bearing, and an inner ring of the intermediate shaft bearing is configured to be in transmission connection with an intermediate shaft of the reducer;
the output shaft bearing cavity is configured to fasten an outer ring of an output shaft bearing, and an inner ring of the output shaft bearing is configured to be in transmission connection with an output shaft of the reducer; and
a distance between the output shaft bearing cavity and the shaft hole is greater than a distance between the intermediate shaft bearing cavity and the shaft hole, and a distance between the at least one line outlet hole and the input shaft bearing cavity is less than a distance between the at least one line outlet hole and the output shaft bearing cavity.

9. The powertrain according to any one of claims 1 to 8, wherein the powertrain comprises the other motor, the other reducer, the other intermediate integrated housing, one middle partition plate, and two end plates;
the middle partition plate is configured to fasten the other circumferential housing in the intermediate integrated housing to form one reducer accommodating cavity, the reducer accommodating cavity is configured to accommodate the reducer, the middle partition plate is configured to fasten the other circumferential housing in the other intermediate integrated housing to form the other reducer accommodating cavity, and the other reducer accommodating cavity is configured to accommodate the other reducer; and
one of the end plates is configured to fasten one of the circumferential housings in the intermediate integrated housing to form one motor accommodating cavity, the motor accommodating cavity is configured to accommodate the motor, the other end plate is configured to fasten one of the circumferential housings in the other intermediate integrated housing to form the other motor accommodating cavity, and the other motor accommodating cavity is configured to accommodate the other motor.

10. The powertrain according to claim 9, wherein the powertrain comprises the other resolver, and an end face that is of a partition plate in the other intermediate integrated housing and that faces a motor stator of the other motor is configured to fasten the other resolver; and
in the axial direction of the powertrain, a distance between the resolver and the other resolver is greater than a distance between the partition plate in the intermediate integrated housing and the partition plate in the other intermediate integrated housing, and less than a distance between the motor stator of the motor and the motor stator of the other motor.

11. A powertrain integrating two motors, wherein the powertrain comprises two motors, two reducers, two resolvers, two intermediate integrated housings, and a middle partition plate, and each of the intermediate integrated housings comprises two circumferential housings and one partition plate that are integrally die-cast;
the two circumferential housings in each of the intermediate integrated housings are arranged in an axial direction of the powertrain, one of the circumferential housings is configured to fasten a motor stator of one of the motors and accommodate a motor rotor of the motor, and the other circumferential housing is configured to accommodate a gear set of one of the reducers;
the middle partition plate comprises two mounting faces in the axial direction of the powertrain, and each of the mounting faces is configured to fasten the other circumferential housing in one of the intermediate integrated housings;
the other circumferential housing in each of the intermediate integrated housings comprises at least one through hole, the at least one through hole penetrates the other circumferential housing, the partition plate in each of the intermediate integrated housings comprises one shaft hole, at least one line outlet hole, and two end faces opposite to each other in the axial direction of the powertrain, and the shaft hole and the at least one line outlet hole are used for communication between inner cavities of the two circumferential housings in the same intermediate integrated housing; and
each shaft hole is coaxially arranged with an input shaft of one of the reducers or a motor shaft of one of the motors, and a distance between the at least one line outlet hole and a center point of the shaft hole is greater than an inner diameter of a resolver stator of one of the resolvers.

12. The powertrain according to claim 11, wherein the powertrain further comprises a motor controller housing, the motor controller housing comprises a control signal connector mounting hole and a high-voltage direct current connector mounting hole, the control signal connector mounting hole is used to fasten a control signal connector, the control signal connector is configured to transmit a control signal to a motor controller, the high-voltage direct current connector mounting hole is used to fasten a high-voltage direct current connector, and the high-voltage direct current connector is configured to receive power supplied by a power battery;
the control signal connector mounting hole and the high-voltage direct current connector mounting hole are oppositely arranged in a direction perpendicular to the axial direction of the powertrain; and
in the direction in which the control signal connector mounting hole and the high-voltage direct current connector mounting hole are oppositely arranged, the control signal connector mounting hole and the high-voltage direct current connector mounting hole penetrate the motor controller housing.

13. The powertrain according to claim 12, wherein the at least one through hole of the other circumferential housing in each of the intermediate integrated housings is used for communication between an inner cavity of the motor controller housing and the inner cavity of the other circumferential housing; and
in the axial direction of the powertrain, the at least one through hole of the other circumferential housing in one of the intermediate integrated housings and the at least one through hole of the other circumferential housing in the other intermediate integrated housing are respectively arranged on two sides of the middle partition plate.

14. The powertrain according to any one of claims 11 to 13, wherein the powertrain comprises two end plates, the motor controller housing comprises two side faces, the two side faces are oppositely arranged in the axial direction of the powertrain, the two end plates are oppositely arranged in the axial direction of the powertrain, and a distance between the two side faces is less than a distance between the two end plates in the axial direction of the powertrain; and
one of the end plates is configured to fasten one of the circumferential housings in one of the intermediate integrated housings to form one motor accommodating cavity, the motor accommodating cavity is configured to accommodate one of the motors, the other end plate is configured to fasten one of the circumferential housings in the other intermediate integrated housing to form the other motor accommodating cavity, and the other motor accommodating cavity is configured to accommodate the other motor.

15. An electric vehicle, wherein the electric vehicle comprises a wheel, a battery pack, and the powertrain according to any one of claims 1 to 14, and the powertrain is configured to receive power supplied by the battery pack and drive the wheel.
